(19) Europäisches Patentamt
European Patent Office
Office européen des brevets

(11) **EP 4 025 403 B1**

(12) **EUROPÄISCHE PATENTSCHRIFT**

(45) Veröffentlichungstag und Bekanntmachung des Hinweises auf die Patenterteilung:
**11.10.2023  Patentblatt 2023/41**

(21) Anmeldenummer: **20761270.6**

(22) Anmeldetag: **28.08.2020**

(51) Internationale Patentklassifikation (IPC):
*B29C 45/14* (2006.01)     *B29C 45/17* (2006.01)
*B29C 45/00* (2006.01)

(52) Gemeinsame Patentklassifikation (CPC):
**B29C 45/14311; B29C 45/14622; B29C 45/1711;**
B29C 45/1418; B29C 2045/0093;
B29C 2045/14327; B29C 2045/1436

(86) Internationale Anmeldenummer:
**PCT/EP2020/074110**

(87) Internationale Veröffentlichungsnummer:
**WO 2021/043683 (11.03.2021 Gazette 2021/10)**

(54) **HOHLPROFIL-VERBUNDTECHNOLOGIE**

HOLLOW-PROFILE COMPOSITE TECHNOLOGY

TECHNOLOGIE DE PRODUCTION DE COMPOSITES FONDÉE SUR DES PROFILÉS CREUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.09.2019  EP 19194862**

(43) Veröffentlichungstag der Anmeldung:
**13.07.2022  Patentblatt 2022/28**

(73) Patentinhaber: **LANXESS Deutschland GmbH**
**50569 Köln (DE)**

(72) Erfinder: **DAJEK, Ulrich**
**51375 Leverkusen (DE)**

(74) Vertreter: **Michalski Hüttermann & Partner**
**Patentanwälte mbB**
**Kaistraße 16A**
**40221 Düsseldorf (DE)**

(56) Entgegenhaltungen:
**EP-A1- 2 830 848**        **EP-A1- 3 369 544**
**WO-A1-01/87568**        **WO-A1-2019/034208**
**DE-A1- 19 747 021**        **DE-A1-102008 046 602**
**DE-A1-102011 010 997**        **JP-A- H07 223 236**
**JP-A- H08 312 757**        **JP-A- 2008 150 218**

• **BRUNSWICK A ET AL: "HERSTELLUNG MEDIENFUEHRENDER LEITUNGEN", GASINJEKTIONSTECHNIK, XX, XX, 1. April 2003 (2003-04-01), Seiten 185-200, XP009015088,**

**EP 4 025 403 B1**

**Beschreibung**

Die Erfindung betrifft ein Verfahren zur Herstellung eines Verbundbauteils mit wenigstens einem Funktionselement aus wenigstens einem zylinderförmigen Hohlprofil und wenigstens einem mittels spezieller Spritzgießverfahren in das Hohlprofil einzubringenden Kunststoff.

Vielfach werden Verbundbauteile bereits heute im Kraftfahrzeugbau eingesetzt. Zumeist werden sie aus einem metallischen, geschlossenen Hohlprofil hergestellt, das mit wenigstens einem separat hergestellten Kunststoffelement verbunden wird. Das Herstellen zweier separater Bauteile und schließlich das Verbinden dieser wenigstens zwei Bauteile führt zu erhöhtem Fertigungs- und Montageaufwand. Zum Verbinden des Hohlprofils mit dem oder den Kunststoffelement(en) sind ferner zusätzliche Verbindungsmittel in Form von Schrauben, Muttern, Nieten o. ä. erforderlich, was in der Regel wiederum mehr Bauraum erfordert und zu höherem Gewicht des Verbundbauteils führt.

Vergleichbare, allein aus Kunststoff bestehende Verbundbauteile - d. h. sowohl Hohlprofil als auch Kunststoffelemente sind aus Kunststoff -, zeigen bei vertretbarer Dimensionierung der Querschnitte geringere Festigkeiten und Steifigkeiten, aber auch Nachteile in der Energieaufnahme bei schlagartiger Beanspruchung, verglichen mit gleichartigen Bauteilen aus metallischen Werkstoffen.

WO 01/87568 A1 beschreibt ein Verfahren zur Herstellung eines Formteils aus einem Metall-/Kunststoffverbund durch Innenhochdruckumformen von rohrförmigem Halbzeug aus Metall wozu das Halbzeug in ein wenigstens zweiteiliges Formwerkzeug mit einem der Aussenkontur des Formteils entsprechenden Formraum eingelegt, das Formwerkzeug geschlossen, das rohrförmige Halbzeug an seinen offenen Stirnseiten druckfest abgedichtet und von wenigstens einer Stirnseite mit einer Polymerschmelze unter hohem Druck in den Formraum eingeformt wird. Die Polymerschmelze wird durch Spritzgießen mittels eines herkömmlichen Spritzgießaggregats in das Halbzeug gedrückt. Nach ausreichender Erstarrung der Polymerschmelze im Wandbereich des metallischen Formteils wird die Polymerschmelze aus dem Formteil verdrängt, so dass ein metallisches Formteil mit einer Innenbeschichtung aus Kunststoff erhalten wird.

Die Erfindung der EP 3369544 A1 betrifft ein Verfahren zur Herstellung eines Verbundbauteils aus wenigstens einem Hohlprofilgrundkörper und wenigstens einem, im Inneren des wenigstens einen Hohlprofilgrundkörpers positionierten, Stützelement.

WO 2009/077026 A1 beschreibt ein Verfahren zur Herstellung eines Verbundbauteils aus einem Hohlprofil und einem Spritzgusselement, wobei das Spritzgusselement äußerlich an das Hohlprofil angespritzt wird, so dass das Hohlprofil in Umfangsrichtung unverlierbar umgriffen wird, wobei am Hohlprofil zumindest ein Formschlusselement ausgebildet und beim Anspritzen erfasst wird, indem das zwischen den Enden des Hohlprofils liegende Formschlusselement in Umfangsrichtung und Längserstreckung zum Hohlprofil begrenzt aus- oder eingeformt wird.

EP 3369544 A1 betrifft ein Verfahren zur Herstellung eines Verbundbauteils aus wenigstens einem Hohlprofil und wenigstens einem, im Innern des wenigstens einen Hohlprofils zu positionierenden Stützelements, wobei ein Kunststoff von außen auf das Hohlprofil aufgetragen wird.

DE 202018001599 U1 beschreibt einen Demonstrator auf Basis eine zylinderförmigen Hohlprofils das von zwei Auslegern in einer gegenüber liegenden Anordnung von 180°, mit Abweichungen im Bereich von +/- 10%, ringförmig umschlossen ist, wobei die Ausleger durch äußerlichen Kunststoffauftrag mittel Spritzguss an das Hohlprofil angebracht werden.

Nachteilig an den im Stand der Technik beschriebenen Verfahren ist, dass der äußerliche Kunststoffauftrag auf das Hohlprofil zu lokalem Kollabieren der Wandung des Hohlprofils, oder zu unkontrollierbarem Eindringen von Kunststoff ins Hohlprofil durch vorgesehene Perforationen in der Hohlprofilwandung führen kann. Ein erheblicher Nachteil ist zudem, dass keine Hohlprofile mit Biegungen, insbesondere Biegungen von 90°, verarbeitet werden können. Im Falle von Hohlprofilen mit Biegungen ist das Einführen von Stützkörpern wie im Falle der EP 3369544 A1 und damit ein Vermeiden des Kollabierens des Hohlprofils aufgrund des Spritzdrucks bzw. Pressdrucks nicht möglich. Nachteilig am Verfahren der EP 3369544 A1 ist zudem der vorgelagerte Schritt zur Herstellung geeigneter Stützelemente, die an das jeweils einzusetzende Hohlprofil individuell angepasst und vorfabriziert werden müssen.

Der vorliegenden Erfindung lag deshalb die Aufgabe zugrunde, ein Verfahren zur Herstellung von Verbundbauteilen auf Basis wenigstens eines dünnwandigen Hohlprofils mit wenigstens einer Biegung und wenigstens einem, mittels Spritzguss zu erzeugendem Funktionselement bereitzustellen, wobei das wenigstens eine Funktionselement mit dem Hohlprofil sowohl radial, als auch axial formschlüssig und mechanisch steif verbunden ist.

Dünnwandig im Sinne der vorliegenden Erfindung bedeutet hinsichtlich eines erfindungsgemäß einzusetzenden Hohlprofils vorzugsweise ein Verhältnis von Durchmesser zur Wanddicke des Hohlprofils im Bereich von 5:1 bis 300:1.

Zudem sollen erfindungsgemäß herzustellende Verbundbauteile die in Bezug auf den zitierten Stand der Technik genannten Nachteile in der Fertigung oder Nachteile in den Festigkeits- und Steifigkeitseigenschaften und somit auch im Energieaufnahmeverhalten nicht oder zumindest deutlich reduziert aufweisen und ein hohes Maß an Funktionsintegration im Sinne der System- bzw. Modulbildung bei wirtschaftlicher Fertigung ermöglichen.

2

**Erfindung**

Die Lösung der Aufgabe ist ein Verfahren zur Herstellung eines Verbundbauteils durch

a) Bereitstellen eines Spritzgießwerkzeugs mit wenigstens einer zu öffnenden Kavität und einem Werkzeugmaß A in Schließrichtung und einem Werkzeugmaß B rechtwinklig zur Schließrichtung des Werkzeugs und einem Kavitätsumfang UW das dem Umfang der Kavität im Bereich der Werkzeugmaße A und B entspricht, und wenigstens einer Nebenkavität,

b) Bereitstellen wenigstens eines Hohlprofils in Form eines Hohlzylinders mit

i) dem Hohlprofilumfangsmaß UH, der Wanddicke S, dem Außendurchmesser C und der Längsachse L,

ii) wenigstens einer Biegung mit dem Winkel W und

iii) wenigstens einer Perforation 2 entlang seiner Längsachse L,
und in Bereichen des Hohlprofils ohne Biegung

iv) mit einem Verhältnis von Außendurchmesser C zur Wanddicke S im Bereich von 5:1 bis 300:1, wobei der Außendurchmesser C im Bereich der Werkzeugkontaktflächen um einen Bereich von 0,1 bis 5% größer ist als das Werkzeugmaß A und um einen Bereich von 0,1 bis 5% kleiner ist als das Werkzeugmaß B, und

v) die Angaben zum Außendurchmesser C sich auf 90° in Richtung zur Längsachse L des Hohlprofils gesehen beziehen, und

vi) das Hohlprofilumfangsmaß $UH = C \cdot \pi$ dem Kavitätsumfangsmaß UW der wenigstens einen Spritzgießwerkzeugkavität in geschlossenem Zustand entspricht, und

vii) als Werkzeugkontaktflächen K die Dichtflächen des Werkzeugs in geschlossenem Zustand mit dem Hohlprofil bezeichnet werden,

c) Einlegen des wenigstens einen Hohlprofils in die wenigstens eine Kavität des Spritzgießwerkzeugs,

d) Schließen der wenigstens einen Kavität des Spritzgießwerkzeugs und Verpressen des Hohlprofils an seinen Werkzeugkontaktflächen in Schließrichtung der wenigstens einen Kavität,

e) Einspritzen von Kunststoff in das Innere des Hohlprofils und gleichzeitiges Befüllen der wenigstens einen Nebenkavität über die wenigstens eine Perforation 2 im Hohlprofil,

f) Herausdrücken von überschüssigem Kunststoff durch wenigstens eine der beiden seitlichen Öffnungen des Hohlprofils durch Injektion von Gas oder Fluid oder einer Kombination von beidem,

g) Abkühlen der in das Hohlprofil und in die Nebenkavität in e) eingebrachten Kunststoffschmelze (Solidifikation), und

h) Entnehmen des fertigen Verbundbauteils aus dem Spritzgießwerkzeug und gegebenenfalls Entfernen von Angüssen,

mit der Maßgabe, dass sich die Angaben zu Werkzeugmaß A, zu Werkzeugmaß B und zum Kavitätsumfangsmaß UW in Verfahrensschritt a) sich auf Bereiche des Spritzgießwerkzeugs beziehen, in denen Bereiche des Hohlprofils ohne Biegung liegen und das Hohlprofil auf Metall oder auf einem Composite basiert und die wenigstens eine zu öffnende Kavität zusammen mit der wenigstens einen Nebenkavität die Außenkontur des Verbundbauteils darstellt und die zu öffnende Kavität eine rohrförmige Gestalt mit wenigstens einer Biegung aufweist.

Überraschenderweise erlaubt das erfindungsgemäße Verfahren die Herstellung von Verbundbauteilen aus einem Hohlprofil mit einem Kunststoffeintrag ins Innere des Hohlprofils und einem Kunststoffauftrag auf der inneren Wandung des Hohlprofils, wodurch ein Kollabieren des Hohlprofils von vorne herein vermieden wird. Durch wenigstens eine im Hohlprofil vorgesehene Perforation 2 kann in einem Guss durch das Innere des Hohlprofils zudem wenigstens eine Nebenkavität gefüllt und damit wenigstens ein Funktionselement an das Hohlprofil angefügt werden. Das erfindungsgemäße Verfahren erlaubt zudem den Einsatz von Hohlprofilen mit wenigstens einer Biegung, die durch den oben beschriebenen Stand der Technik nicht zu verarbeiten sind.

In einer Ausführungsform betrifft die vorliegende Erfindung ein Verbundbauteil erhältlich durch

a) Bereitstellen eines Spritzgießwerkzeugs mit wenigstens einer zu öffnenden Kavität und einem Werkzeugmaß A in Schließrichtung und einem Werkzeugmaß B rechtwinklig zur Schließrichtung des Werkzeugs und einem Kavitätsumfang UW das dem Umfang der Kavität im Bereich der Werkzeugmaße A und B entspricht, und wenigstens einer Nebenkavität,

b) Bereitstellen wenigstens eines Hohlprofils in Form eines Hohlzylinders mit

i) dem Hohlprofilumfangsmaß UH, der Wanddicke S, dem Außendurchmesser C und der Längsachse L,

ii) wenigstens einer Biegung mit dem Winkel W und

iii) wenigstens einer Perforation 2 entlang seiner Längsachse L,
und in Bereichen des Hohlprofils ohne Biegung

iv) mit einem Verhältnis von Außendurchmesser C zur Wanddicke S im Bereich von 5:1 bis 300:1, wobei der Außendurchmesser C im Bereich der Werkzeugkontaktflächen um einen Bereich von 0,1 bis 5% größer ist als das Werkzeugmaß A und um einen Bereich von 0,1 bis 5% kleiner ist als das Werkzeugmaß B, und

v) die Angaben zum Außendurchmesser C sich auf 90° in Richtung zur Längsachse L des Hohlprofils gesehen beziehen, und

vi) das Hohlprofilumfangsmaß UH = C $\cdot$ $\pi$ dem Kavitätsumfangsmaß UW der wenigstens einen Spritzgießwerkzeugkavität in geschlossenem Zustand entspricht, und

vii) als Werkzeugkontaktflächen K die Dichtflächen des Werkzeugs in geschlossenem Zustand mit dem Hohlprofil bezeichnet werden,

c) Einlegen des wenigstens einen Hohlprofils in die wenigstens eine Kavität des Spritzgießwerkzeugs,

d) Schließen der wenigstens einen Kavität des Spritzgießwerkzeugs und Verpressen des Hohlprofils an seinen Werkzeugkontaktflächen in Schließrichtung der wenigstens einen Kavität,

e) Einspritzen von Kunststoff in das Innere des Hohlprofils und gleichzeitiges Befüllen der wenigstens einen Nebenkavität über die wenigstens eine Perforation 2 im Hohlprofil,

f) Herausdrücken von überschüssigem Kunststoff durch wenigstens eine der beiden seitlichen Öffnungen des Hohlprofils durch Injektion von Gas oder Fluid oder einer Kombination von beidem,

g) Abkühlen der in das Hohlprofil und in die Nebenkavität in e) eingebrachten Kunststoffschmelze (Solidifikation), und

h) Entnehmen des fertigen Verbundbauteils aus dem Spritzgießwerkzeug und gegebenenfalls Entfernen von Angüssen,

mit der Maßgabe, dass sich die Angaben zu Werkzeugmaß A, zu Werkzeugmaß B und zum Kavitätsumfangsmaß UW in Verfahrensschritt a) sich auf Bereiche des Spritzgießwerkzeugs beziehen, in denen Bereiche des Hohlprofils ohne Biegung liegen und das Hohlprofil auf Metall oder einem Composite basiert und die wenigstens eine zu öffnende Kavität zusammen mit der wenigstens einen Nebenkavität die Außenkontur des Verbundbauteils darstellt und die zu öffnende Kavität eine rohrförmige Gestalt mit wenigstens einer Biegung aufweist..

Die Erfindung betrifft insbesondere bevorzugt ein Verfahren zur Herstellung eines Verbundbauteils, dadurch gekennzeichnet, dass man

a) ein wenigstens zweiteiliges Spritzgießwerkzeug mit einer der Aussenkontur des Verbundbauteils entsprechenden Kavität,

mit Werkzeugkontaktflächen (K),

mit der Werkzeughälfte (**4**) und der Werkzeughälfte (**5**),

mit wenigstens einer zu öffnenden Kavität und einem Werkzeugmaß (**A**) in Schließrichtung (**6**) und

einem Werkzeugmaß (**B**) rechtwinklig zur Schließrichtung (**6**) des Spritzgießwerkzeugs und

einem Kavitätsumfang (**UW**) das dem Umfang der wenigstens einen zu öffnenden Kavität im Bereich der Werkzeugmaße (**A**) und (**B**) entspricht, und

wenigstens einer Nebenkavität für ein Funktionselement (**3**) bereitstellt,

b) wenigstens ein Hohlprofil in Form eines Hohlzylinders mit

i) dem Hohlprofilumfangsmaß (**UH**), der Wanddicke (**S**), dem Außendurchmesser (**C**), der Innenfläche (**7**) und der Längsachse (**L**),

ii) wenigstens einer Biegung mit dem Winkel (**W**),

iii) wenigstens einer Perforation (**2**) entlang seiner Längsachse (**L**), und in Bereichen des Hohlprofils (**1**) ohne Biegung

iv) mit einem Verhältnis von Außendurchmesser (**C**) zur Wanddicke (**S**) im Bereich von 5:1 bis 300:1, wobei der Außendurchmesser (**C**) im Bereich der Werkzeugkontaktflächen (**K**) um einen Bereich von 0,1 bis 5% größer ist als das Werkzeugmaß (**A**) und um einen Bereich von 0,1 bis 5% kleiner ist als das Werkzeugmaß (**B**), und

v) die Angaben zum Außendurchmesser (**C**) sich auf 90° in Richtung zur Längsachse (**L**) des Hohlprofils (**1**) gesehen beziehen, und

vi) das Hohlprofilumfangsmaß $UH = C \cdot \pi$ dem Kavitätsumfangsmaß (**UW**) der wenigstens einen zu öffnenden Kavität in geschlossenem Zustand entspricht, und

vii) als Werkzeugkontaktflächen (**K**) die Dichtflächen des Spritzgießwerkzeugs in geschlossenem Zustand mit dem Hohlprofil (**1**) bezeichnet werden,

c) das wenigstens eine Hohlprofil (**1**) in die wenigstens eine zu öffnende Kavität des Spritzgießwerkzeugs einlegt,

d) die wenigstens eine zu öffnende Kavität des Spritzgießwerkzeugs schließt und das Hohlprofil (**1**) an seinen Werkzeugkontaktflächen (**K**) in Schließrichtung der wenigstens einen zu öffnenden Kavität verpresst,

e) Kunststoff in das Innere des Hohlprofils (**1**) einspritzt und gleichzeitig die wenigstens eine Nebenkavität über die wenigstens eine Perforation (**2**) im Hohlprofil (**1**) befüllt, wobei der im Hohlprofil (**1**) verbleibende Kunststoff einen Kunststoffüberzug (**11**) auf der Innenfläche (**7**) des Hohlprofils (**1**) hinterlässt,

f) überschüssigen Kunststoff durch wenigstens eine der beiden seitlichen Öffnungen des Hohlprofils (**1**) durch Injektion von Gas oder Fluid oder einer Kombination von beidem herausdrückt,

g) die in das Hohlprofil (**1**) und durch die Perforation (**2**) in die Nebenkavität in Verfahrensschritt e) eingebrachte Kunststoffschmelze abkühlt, und

h) das fertige Verbundbauteil aus dem Spritzgießwerkzeug entnimmt und gegebenenfalls Angüsse entfernt,

mit der Maßgabe, dass sich die Angaben zu Werkzeugmaß (**A**), zu Werkzeugmaß (**B**) und zum Kavitätsumfangsmaß (**UW**) in Verfahrensschritt a) sich auf Bereiche des Spritzgießwerkzeugs beziehen, in denen Bereiche des Hohlprofils (**1**) ohne Biegung vorliegen und das Hohlprofil (**1**) auf Metall oder auf einem Composite basiert und die wenigstens eine zu öffnende Kavität zusammen mit der wenigstens einen Nebenkavität die Außenkontur des Verbundbauteils darstellt und die zu öffnende Kavität eine rohrförmige Gestalt mit wenigstens einer Biegung aufweist.

Durch das Kombinieren des in das Innere des Hohlprofils (**1**) einzuspritzenden Kunststoffs und das gleichzeitige Ausgestalten wenigstens eines Funktionselements (**3**) durch wenigstens eine Perforation (**2**) in der Wandung des Hohlprofils und Befüllen von wenigstens einer die Perforation (**2**) abdichtenden Nebenkavität entsteht eine formschlüssige Verbindung des Hohlprofils (**1**) mit dem Funktionselement (**3**) mit der Blockierung aller Freiheitsgrade, translatorisch in X-, Y- und Z-Richtung und rotatorisch um die X-, Y- und Z-Achse und somit eine schubfeste und schubsteife Verbindung wenigstens in axialer, vorzugsweise in axialer und radialer Richtung, bezogen auf das Hohlprofil (**1**).

Ein nachträgliches Entfernen von Stützelementen wie im Stand der Technik entfällt. Stattdessen wird überschüssiger Kunststoff durch Injektion von Gas oder Flüssigkeit vor dem endgültigen Erstarren des Kunststoffs im Innern des Hohlprofils aus diesem wieder entfernt.

Zur Klarstellung sei angemerkt, dass alle aufgeführten, allgemeinen oder in Vorzugsbereichen genannten Definitionen und Parameter in beliebigen Kombinationen umfasst sind. Im Rahmen dieser Anmeldung zitierte Normen gelten in der zum Anmeldetag gültigen Fassung. Die Begriffe **Spritzgießwerkzeug** und **Werkzeug** werden im Rahmen der vorliegenden Erfindung synonym verwendet.

**Verpressen** gemäß dem Verfahrensschritt d) bedeutet ein Verformen des Hohlprofils bei dem keine Umfangserweiterung sondern nur eine Formänderung herbeigeführt wird. Bei einem toleranzbedingten Übermaß des Hohlprofilumfangs (**UH**) wird ebenfalls im Wesentlichen eine Formänderung herbeigeführt. Gegen Ende der Werkzeugschließbewegung kann im Rahmen der vorliegenden Erfindung der Fachmann eine geringfügige Umfangsverringerung feststellen.

Unter einer **Nebenkavität** wird im Rahmen der vorliegenden Erfindung wenigstens eine im Verfahrensschritt e) im Spritzguss zu befüllende Kavität für ein mit dem Kunststoff im Innern des Hohlprofils (**1**) verbundenes Funktionselement (**3**) verstanden.

Unter einer **Perforation** wird im Rahmen der vorliegenden Erfindung wenigstens eine Öffnung, Bohrung oder ein Loch in der Wandung und senkrecht zur Längsachse des Hohlprofils (**1**) verstanden. Erfindungsgemäß dient die wenigstens eine Perforation (**2**) im Hohlprofil für die Ausgestaltung des wenigstens einen, im Spritzguss zu fertigenden Funktionselements (**3**).

Erfindungsgemäß wird ein Hohlprofil (**1**) in Form eines **Hohlzylinders** eingesetzt. Besitzt ein gerader Kreiszylinder eine Bohrung entlang seiner Längsachse, so spricht man von einem Hohlzylinder. Als Folge der Bohrung entlang seiner Längsachse verfügt ein erfindungsgemäß einzusetzendes Hohlprofil über zwei offene Stirnseiten, im Rahmen der vorliegenden Erfindung auch als seitliche Öffnungen bezeichnet. Für einen Hohlzylinder, idealerweise ein gerades Rohrstück, sind die bestimmenden Größen neben der Längsachse (**L**) der Außendurchmesser (**C**), das Hohlprofilumfangsmaß $UH = C \cdot \pi$ und die Wanddicke (**S**). Infolgedessen beziehen sich entsprechende Angaben im Rahmen der vorliegenden Erfindung auf Bereiche eines erfindungsgemäß einzusetzendes Hohlprofils in denen keine Biegung vorliegt. Vorzugsweise ist das erfindungsgemäß einzusetzende Hohlprofil (**1**) ein Rohr.

Ein erfindungsgemäß einzusetzendes Hohlprofil (**1**) in Form eines Hohlzylinders kann bedingt durch Fertigungstoleranzen in einer Ausführungsform von einem idealen kreisrunden Umfang abweichen. Vorzugsweise liegt dann das Verhältnis des Hohlprofilumfangsmaßes (**UH**) zum inneren Umfang der Kontaktflächen der Spritzgießwerkzeugkavität im Bereich von 1,001 : 1 bis 1,1 : 1.

Die Schubfestigkeit ist eine Stoffkonstante, die den Widerstand eines Werkstoffs gegen Abscherung beschreibt, also gegen eine Trennung durch Kräfte, die zwei einander anliegende Flächen längs zu verschieben suchen. Die Schubfestigkeit wird bestimmt durch den Schubmodul, auch Gleitmodul genannt. **Schubfest miteinander verbunden** bedeutet im Sinne der vorliegenden Erfindung eine in axialer Richtung, vorzugsweise in axialer und radialer Richtung des Hohlprofils schubsteife, formschlüssige Verbindung desselben mit wenigstens einem Funktionselement.

Die Schubsteifigkeit ist das Produkt aus dem Schubmodul $G$ eines Werkstoffs und der Querschnittsfläche $A$. Es gilt:

$$\textbf{Schubsteifigkeit} = \boldsymbol{G} \cdot \boldsymbol{A} \cdot \kappa \, ( = \boldsymbol{G} \cdot \boldsymbol{A}_\mathrm{s})$$

Der querschnittsabhängige Korrekturfaktor $\kappa$ berücksichtigt dabei die über den Querschnitt ungleichförmige Verteilung der Schubspannung $\tau$. Oft wird die Schubsteifigkeit auch mithilfe der Schubfläche $\boldsymbol{A}_\mathrm{s}$ ausgedrückt. Siehe: **https://de.wikipedia.org/wiki/Steifigkeit.**

**Formschlüssige Verbindungen** im Sinne der vorliegenden Erfindung entstehen durch das Ineinandergreifen von mindestens zwei Verbindungspartnern, die eine nichtlösbare Verbindung miteinander eingehen und sich nur durch Zerstören voneinander wieder trennen. Siehe: **https://de.wikipedia.org/wiki/Verbindungstechnik**.

**Bevorzugte Ausführungsformen der Erfindung**

In einer bevorzugten oder alternativen Ausführungsform wird die wenigstens eine Perforation (**2**) vor, während oder nach Verfahrensschritt b) in Form eines Loches oder einer Bohrung, bevorzugt in Form mehrerer Löcher bzw. Bohrungen, von außen in die Wandung des Hohlprofils (**1**) an Positionen eingebracht, an denen wenigstens ein Funktionselement (**3**) vorgesehen ist. In diesem Fall erfolgt eine entsprechende Anpassung der Spritzgießwerkzeugkavität vor dem Verfahrensschritt a).

In bevorzugter oder alternativer Ausführungsform steht es dem Fachmann frei, den Verbund eines mittels Kunststoffeinspritzung ins Hohlprofil gleichzeitig ausgestalteten Funktionselements (**3**) mit dem Hohlprofil (**1**) durch zusätzliche Maßnahmen zu unterstützen. Derartige Maßnahmen umfassen das Einbringen von Sicken, Löcher, Bohrungen in die Hohlprofilwandung oder das Auftragen zusätzlicher Verankerungselemente.

Im Falle des Verfahrensschritts f) wird wenigstens ein Gas oder ein Fluid injiziert. Im Falle des Einsatzes von Gas bedient man sich vorzugsweise des GIT Verfahrens (GIT = Gasinjektionstechnik), bei dem keine separate druckfeste Abdichtung an der Injektionsstelle des Gases erforderlich ist, weil die Gasblase direkt, vorzugsweise mittels Injektor-Nadel, in die heiße Seele der Schmelze des in Verfahrensschritt e) einzuspritzenden Kunststoffs injiziert wird. Gleiches gilt für den Fall, dass ein Fluid, vorzugsweise Wasser, verwendet wird. Die Wasserinjektionstechnik wird auch Wasserinnendruck-Spritzgießen (WID) genannt. Im Prinzip entspricht es der Gasinjektionstechnik mit dem Unterschied, dass anstelle von Gas Wasser mithilfe eines Injektors in den spritzfrischen Kunststoff eingeleitet wird.

**Verfahrensschritt a)**

Verfahrensschritt a) betrifft das Bereitstellen eines Spritzgießwerkzeugs mit wenigstens einer zu öffnenden Kavität und einem Werkzeugmaß (**A**) in Schließrichtung und einem Werkzeugmaß (**B**) rechtwinklig zur Schließrichtung des Werkzeugs und einem Kavitätsumfangsmaß UW das dem Umfang der Kavität im Bereich der Werkzeugmaße (**A**) und (**B**) entspricht und wenigstens einer Nebenkavität. Die Schließrichtung (**6**) bezieht sich erfindungsgemäß auf das einzusetzende Spritzgießwerkzeug und die Angaben zu Werkzeugmaß (**A**), Werkzeugmaß (**B**) und Kavitätsumfangsmaß (**UW**) sich auf Bereiche des Spritzgießwerkzeugs beziehen, in denen Bereiche des Hohlprofils ohne Biegung liegen (werden).

Vorzugsweise weist ein erfindungsgemäß einzusetzendes Spritzgießwerkzeug zwei Werkzeughälften auf. Je nach Ausgestaltung des zu fertigenden Verbundbauteils können aber die Werkzeughälften in bevorzugter Ausführungsform wiederum aus mehreren Segmenten bestehen. Der Fachmann wird die Auslegung des einzusetzenden Spritzgießwerkzeugs entsprechend dem zu fertigenden Verbundbauteil anpassen. Eine Zusammenfassung erfindungsgemäß in Verfahrensschritt a) bereitzustellender Spritzgießwerkzeuge sowie zu Herstellern derselben findet sich u.a. in W. Michaeli, G. Menges, P. Mohren, Anleitung zum Bau von Spritzgießwerkzeugen, 5. Völlig überarbeitete Auflage, Carl Hanser Verlag München Wien 1999 (englische Ausgabe 2001**).**

Vorzugsweise weist ein erfindungsgemäß einzusetzendes Spritzgießwerkzeug folgende Merkmale auf, damit sich ein erfindungsgemäß einzusetzendes Hohlprofil (**1**) mit all seinen Maß- und Formtoleranzen ohne Zwang in das Spritzgießwerkzeug einlegen lässt:

**I.** Das Spritzgießwerkzeug muss so beschaffen sein, das es die Spritzgießkavitäten zu den Bereichen des Hohlprofils (**1**), in denen kein Funktionselement vorgesehen ist, beim Schließen des Werkzeugs abdichtet. Dazu sind im Spritzgießwerkzeug sowohl an den axialen Enden der Spritzgießkavitäten, als auch um das anzuspritzende Funktionselement (**3**) herum, Kontaktflächen (**K**) im Werkzeug notwendig, die das Hohlprofil während des Schließens des Spritzgießwerkzeugs von dessen Außendurchmesser (**C**) auf das Werkzeugmaß (**A**) verpressen, wodurch sich gleichzeitig rechtwinklig dazu der Außendurchmesser (**C**) auf das Werkzeugmaß (**B**) ändert.

**II.** In einer bevorzugten Ausführungsform sind die Kontaktflächen der wenigstens zwei Werkzeughälften zum Hohlprofil (**1**) im Spritzgießwerkzeug so ausgeführt, dass das Hohlprofil über die in **I.** beschriebene Verpressung hinaus in eine Form um einen Bereich von - 0,01 bis -1% von Werkzeugmaß (**A**) und Werkzeugmaß (**B**) zusätzlich verpresst wird.

**III.** Die in **I.** und **II.** genannten Kontaktflächen der wenigstens zwei Werkzeughälften im Spritzgießwerkzeug umfassen das Hohlprofil (**1**) in Bereichen, in denen keine Biegung vorliegt, bei geschlossenem Werkzeug in seinem gesamten Umfang und weisen vorzugsweise eine Breite, d. h. eine Ausdehnung in axialer Richtung des Hohlprofils (**1**) gesehen, im Bereich von 1,0 bis 10,0 mm auf.

**IV.** In einer Ausführungsform sind die Kontaktflächen der wenigstens zwei Werkzeughälften zum Hohlprofil (**1**) im Spritzgießwerkzeug so ausgeführt, dass diese Bereiche im Werkzeug durch gehärtete Einsätze dargestellt werden. Vorzugsweise weisen die gehärteten Einsätze eine Härte nach Rockwell im Bereich von 50 bis 62 HRC auf. Damit liegt die Härte im Bereich üblicher Biege- und Stanzwerkzeuge.
Siehe: **https://de.wikipedia.org/wiki/Rockwell_(Einheit)**.

**V.** Das Spritzgießwerkzeug muss zwischen seinen Kontaktflächen zum Hohlprofil (**1**) außerhalb der Spritzgießkavitäten einen Freiraum um das Hohlprofil (**1**) herum bieten. Vorzugsweise beträgt bzw. liegt dieser Freiraum außerhalb der Dichtflächen im Bereich von 2 bis 30%, besonders bevorzugt 2 bis 10%, vom nominellen Hohlprofildurchmesser, vorzugsweise vom Rohrdurchmesser.

Im Falle des erfindungsgemäß bevorzugten Einsatzes eines Rohres als Hohlprofil wird vorzugsweise eine ovale Werkzeug-Kontaktfläche bereitgestellt.

**Verfahrensschritt b)**

Das Hohlprofil (**1**) wird vor dem Verfahrensschritt b) an beliebiger Position durch das Einwirken von Biegekräften verformt. Die wenigstens eine Biegung im erfindungsgemäß einzusetzenden Hohlprofil (**1**) erfordert eine entsprechende Anpassung der Spritzgießwerkzeugkavität vor dem Verfahrensschritt a).

Im Verfahrensschritt b) wird wenigstens ein Hohlprofil in Form eines Hohlzylinders auf Basis von Metall oder auf Basis eines Composites, insbesondere auf Basis von Metall, mit

i) dem Hohlprofilumfangsmaß (**UH**), der Wanddicke (**S**), dem Außendurchmesser (**C**), der Innenfläche (**7**) und der Längsachse (**L**),

ii) wenigstens einer Biegung mit dem Winkel (**W**),

iii) wenigstens einer Perforation (**2**) entlang seiner Längsachse (**L**), und in Bereichen des Hohlprofils ohne Biegung

iv) mit einem Verhältnis von Außendurchmesser (**C**) zur Wanddicke (**S**) im Bereich von 5:1 bis 300:1, wobei der Außendurchmesser (**C**) im Bereich der Werkzeugkontaktflächen (**K**) um einen Bereich von 0,1 bis 5% größer ist als das Werkzeugmaß (**A**) und um einen Bereich von 0,1 bis 5% kleiner ist als das Werkzeugmaß (**B**), und

v) die Angaben zum Außendurchmesser (**C**) sich auf 90° in Richtung zur Längsachse (**L**) des Hohlprofils (1) gesehen beziehen, und

vi) das Hohlprofilumfangsmaß $UH = C \cdot \pi$ dem Kavitätsumfangsmaß (**UW**) der wenigstens einen zu öffnenden Kavität in geschlossenem Zustand entspricht, und

vii) als Werkzeugkontaktflächen (**K**) die Dichtflächen des Spritzgießwerkzeugs in geschlossenem Zustand mit dem Hohlprofil bezeichnet werden.

Ein erfindungsgemäß einzusetzendes Hohlprofil (**1**) kann nach verschiedenen Verfahren hergestellt werden, verschiedene Querschnittsformen aufweisen und aus verschiedenen Materialien bestehen. Vorzugsweise wird zu dessen Herstellung wenigstens eine der Techniken Strangpressen, Strangziehen, Nahtlosziehen, Längsschweißen, Spiralschweißen, Wickeln und Pultrusion angewandt. Im Hinblick auf Composite basierte Hohlprofile werden zu deren Herstellung vorzugsweise RTM (Resin-Transfer-Moulding), Vakuuminfusion und Formpressen angewandt. Ein vorzugsweise erfindungsgemäß einzusetzendes Hohlprofil (**1**) weist ein kreisrundes oder elliptisches Hohlprofilumfangsmaß (**UH**) auf. Ein elliptisches Hohlprofilumfangsmaß für ein erfindungsgemäß einzusetzendes Hohlprofil weicht dabei maximal 10% von einem idealen kreisrunden Hohlprofilumfangsmaß ab. Das bedeutet bezogen auf ein kreisrundes Hohlprofilumfangsmaß von 10 cm Durchmesser, dass ein erfindungsgemäß einzusetzendes elliptisches Hohlprofil in der Hauptachse maximal 11 cm und in der Nebenachse maximal 9 cm misst. Vorzugsweise weist ein in Verfahrensschritt b) bereitzustellendes Hohlprofil mit wenigstens einer Biegung eine Wanddicke S im Bereich von 0,1 bis 10,0mm auf. Ein erfindungsgemäß einzusetzendes Hohlprofil weist neben den beiden Öffnungen an den Stirnseiten zusätzlich wenigstens eine Perforation (**2**) entlang seiner Längsachse (**L**) zur Befüllung wenigstens einer Nebenkavität auf.

Vorzugsweise weisen erfindungsgemäß einzusetzende Hohlprofile auf Basis von Metall oder auf Basis eines Composites eine Längsachse (**L**) mit einer Länge im Bereich von 60 bis 2000mm auf, damit sie in Kraftfahrzeugen als Verbundbauteil mit wenigstens einem Funktionselement verbaut werden können. Der Fachmann spricht bei Längenangaben gebogener Hohlprofile von der sogenannten "abgewickelten Länge". Die abgewickelte Länge ist die Länge des geraden Rohres vor dem Biegen. Prinzipiell sind erfindungsgemäß aber auch Hohlprofile mit einer längeren abgewickelten Länge einsetzbar um damit längere erfindungsgemäße Verbundbauteile herzustellen. Insbesondere bevorzugt werden für Metall basierte Hohlprofile solche auf Basis von Stahl, Aluminium oder Legierungen des Aluminiums eingesetzt.

Der Begriff Composite betrifft im Rahmen der vorliegenden Erfindung die Kombination wenigstens eines Verstärkungsstoffs mit einer plastifizierbaren Komponente, dem Matrixkunststoff. In Abhängigkeit von der Geometrie eines Verbunds unterscheidet der Fachmann Teilchenverbundwerkstoffe, Faserverbundwerkstoffe, Schichtverbundwerkstoffe (Laminate), Durchdringungsverbundwerkstoffe und Strukturverbundwerkstoffe. Faserverbundwerkstoffe unterteilt man in Kurzfaser-, Langfaser- und Endlos-Faserverbundwerkstoffe. Die Komponenten eines Verbundwerkstoffs können dabei selbst wieder Verbundwerkstoffe sein. Bei Teilchen- und Faserverbundwerkstoffen sind Teilchen bzw. Fasern in die andere Komponente des Verbundwerkstoffs, die sogenannte Matrix, eingebettet. In Faserverbundwerkstoffen können die Fasern in einer oder mehreren bestimmten Richtungen verlaufen bzw. Vorzugsrichtungen haben.

Faserverbundwerkstoffe können schichtweise hergestellt werden, sind dadurch aber noch keine Schichtverbundwerkstoffe, wenn die aufeinanderfolgenden Schichten gleichartig sind. Der Begriff Laminat wird hier allerdings auch verwendet. Schichtverbundwerkstoffe bestehen aus aufeinanderliegenden Schichten unterschiedlicher Anzahl.

Im Falle Composite basierter Hohlprofile werden erfindungsgemäß solche auf Basis thermoplastischer oder duroplastischer Kunststoffe als Matrixpolymer bevorzugt. Vorzugsweise werden als Kunststoffe Polyamide (PA), Polyalkylenterephthalate, Polyethylen (PE), Polypropylen (PP) oder Polyvinylchlorid (PVC) eingesetzt. Besonders bevorzugt wird als thermoplastischer Kunststoff für ein erfindungsgemäß Composite basiertes Hohlprofil Polyamid oder Polyalkylenterephthalat eingesetzt. Bevorzugt wird als Polyamid ein Polyamid 6 eingesetzt. Bevorzugt wird als Polyalkylenterephthalat Polybutylenterephthalat (PBT) oder Polyethylenterephthalat (PET), insbesondere PBT, eingesetzt. Bevorzugte duroplastische Kunststoffe sind Epoxidharze, vernetzbare Polyurethane oder ungesättigte Polyesterharze.

Ein Hohlprofil auf Basis eines Composites enthält neben dem als Matrix einzusetzenden Kunststoff wenigstens einen Verstärkungsstoff. Bevorzugt werden als Verstärkungsstoff Glasfasern eingesetzt. Insbesondere bevorzugt werden auf 100 Massenanteile des thermoplastischen Kunststoffs Verstärkungsstoffe in Mengen im Bereich von 10 bis 400 Massenanteilen eingesetzt. In einer Ausführungsform basiert ein erfindungsgemäß einzusetzendes Hohlprofil aus einem Thermoplast basierten Composite, worin der Verstärkungsstoff im Wesentlichen Gewebe oder Gelege von Fasermatten, insbesondere Glasfasermatten auf Basis von Langglasfasern oder Endlosglasfasern, enthält (GFK). Alternativ ist aber auch der Einsatz kohlenstofffaserverstärkter Kunststoff basierter Composites (CFK), aramidfaserverstärkter Kunststoff basierter Composites (AFK), naturfaserverstärkter Kunststoff basierter Composites (NFK) sowie von Wood-Plastic-Composites (WPC) möglich. Erfindungsgemäß auf Composite basierte Hohlprofile sind vorzugsweise Mehrschichtverbundrohre, insbesondere solche Mehrschichtverbundrohre, deren Aluminiumkern mittels einer Haftschicht beidseitig durch vernetzten Kunststoff umgeben ist, **https://de.wikipedia.org/wiki/Mehrschichtverbundrohr** führt Polyethylen (PE-XE) auf.

Insbesondere bevorzugt werden im Falle Composite basierter Hohlprofile solche aus einem glasfaserverstärkten Polyamid 6 mit 10 bis 233 Massenanteilen Glasfasern auf 100 Massenanteile Polyamid im Spritzgießverfahren hergestellt.

Für Composite basierte Hohlprofile einzusetzendes Polyamid (PA) kann aus unterschiedlichen Bausteinen synthetisiert und nach verschiedenen Verfahren hergestellt werden. Im speziellen Anwendungsfall kann das zu diesem Zweck einzusetzende Polyamid allein eingesetzt oder in dem Fachmann bekannter Weise zu Werkstoffen mit speziell eingestellten Eigenschaftskombinationen ausgerüstet werden. Geeignet sind auch PA-Blends mit Anteilen von anderen Polymeren, bevorzugt mit Anteilen von Polyethylen, Polypropylen oder Acrylnitril-Butadien-Styrol-Copolymer (ABS), wobei gegebenenfalls ein oder mehrere Kompatibilisatoren zum Ausgleich von in solchen Blends auftretenden Phasenungleichheiten eingesetzt werden können. Die Eigenschaften der Polyamide können nach Bedarf durch Zusatz von Elastomeren verbessert werden.

Zur Herstellung von Polyamiden sind eine Vielzahl von Verfahrensweisen bekannt, wobei je nach gewünschtem Endprodukt unterschiedliche Monomerbausteine oder verschiedene Kettenregler zur Einstellung eines angestrebten Molekulargewichts oder auch Monomere mit reaktiven Gruppen für später beabsichtigte Nachbehandlungen eingesetzt werden.

Bevorzugt für Polyamid basierte Composites einzusetzendes Polyamid wird über Polykondensation in der Schmelze hergestellt, wobei im Rahmen der vorliegenden Erfindung auch die hydrolytische Polymerisation von Lactamen als Polykondensation verstanden wird.

Erfindungsgemäß bevorzugt für die Herstellung Composite basierter Hohlprofile einzusetzendes Polyamid geht von Diaminen und Dicarbonsäuren und/oder Lactamen mit wenigstens 5 Ringgliedern oder entsprechenden Aminosäuren aus. Als Edukte kommen bevorzugt aliphatische und/oder aromatische Dicarbonsäuren, besonders bevorzugt Adipinsäure, 2,2,4-Trimethyladipinsäure, 2,4,4-Trimethyl-adipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 1,9-Nonandiamin, 2,2,4- und 2,4,4-Trimethyl-hexamethylendiamin, die Isomeren Diaminodicyclohexylmethane, Diaminodicyclohexylpropane, Bis-aminotnethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt wird als Thermoplast Composite basierter Hohlprofile Polyamid aus Lactamen eingesetzt, ganz besonders bevorzugt werden zu diesem Zweck Caprolactame, insbesondere bevorzugt wird ε-Caprolactam eingesetzt.

Auch durch aktivierte anionische Polymerisation hergestelltes Polyamid oder durch aktivierte anionische Polymerisation hergestelltes Copolyamid mit Polycaprolactam als Hauptbestandteil kann erfindungsgemäß als Matrixpolymer für ein Composite basiertes Hohlprofil eingesetzt werden. Die aktivierte anionische Polymerisation von Lactamen zu Polyamiden wird in technischem Maßstab so durchgeführt, dass man einerseits eine Lösung von Katalysator in Lactam, gegebenenfalls mit Schlagzähmodifikator, und andererseits eine Lösung von Aktivator in Lactam herstellt, wobei üblicherweise beide Lösungen so zusammengesetzt sind, dass ein Zusammengeben im gleichen Verhältnis die gewünschte Gesamtrezeptur ergibt. Weitere Additive können gegebenenfalls der Lactamschmelze zugegeben werden. Die Polymerisation erfolgt durch Vermischen der Einzellösungen zur Gesamtrezeptur bei Temperaturen im Bereich von 80°C bis 200°C, bevorzugt bei Temperaturen im Bereich von 100°C bis 140°C. Als Lactame kommen cyclische Lactame mit 6 bis 12 C-Atomen in Frage, bevorzugt Laurinlactam oder ε-Caprolactam, besonders bevorzugt ε-Caprolactam. Der Katalysator ist ein Alkali- oder Erdalkalilactamat, bevorzugt als Lösung in Lactam, besonders bevorzugt Natriumcaprolactamat in ε-Caprolactam. Als Aktivator im erfindungsgemäßen Sinne können N-Acyllactame oder Säurechloride oder, bevorzugt, aliphatische Isocyanate, besonders bevorzugt Oligomere des Hexamethylendiisocyanats eingesetzt werden. Als Aktivator kann sowohl die Reinsubstanz wie auch bevorzugt eine Lösung, bevorzugt in N-Methylpyrrolidon, dienen.

Besonders geeignet sind für die Herstellung Composite basierter Hohlprofile sind als Matrixpolymer Polyamide mit einer relativen Lösungsviskosität in m-Kresol im Bereich von 2,0 bis 4,0, bevorzugt im Bereich von 2,2 bis 3,5, ganz besonders im Bereich von 2,4 bis 3,1. Die Angaben zur relativen Lösungsviskosität $\eta_{rel}$ erfolgen im Rahmen der vorliegenden Erfindung gemäß **EN ISO 307.** Das Verhältnis der Auslaufzeit t des in m-Kresol gelösten Polyamids zur Auslaufzeit t (0) des Lösungsmittels m-Kresol bei 25°C ergibt die relative Lösungsviskosität gemäß der Formel $\eta_{rel} = t/t(0)$.

Besonders geeignet für die Herstellung Composite basierter Hohlprofile sind zudem Polyamide mit einer Zahl an Aminoendgruppen im Bereich von 25 bis 90 mmol/kg als Matrixpolymer, bevorzugt im Bereich von 30 bis 70 mmol/kg, ganz besonders im Bereich von 35 bis 60 mmol/kg. Die Bestimmung der Aminoendgruppen kann konduktometrisch erfolgen. Siehe hierzu: **Eidgenössische Materialprüfungs- und Versuchsanstalt für Industrie, Bauwesen und Gewerbe, Zürich/St.Gallen, Dr. W. Schefer, Bericht Nr. 157, 1954.**

Ganz besonders bevorzugt werden für die Herstellung Composite basierter Hohlprofile teilkristalline Polyamide oder darauf basierende Compounds als Matrixpolymer eingesetzt. Teilkristalline Polyamide besitzen gemäß DE 10 2011 084 519 A1 eine Schmelzenthalpie im Bereich von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß **ISO 11357** beim 2. Aufheizen und Integration des Schmelzpeaks.

Erfindungsgemäß bevorzugt für die Herstellung Composite basierter Hohlprofile als Polyamid ein Polyamid 6 [CAS Nr. 25038-54-4] oder Polyamid 66 [CAS Nr. 32131-17-2] eingesetzt. Beide sind bei der Lanxess Deutschland GmbH, Köln, unter der Bezeichnung Durethan® erhältlich.

In einer Ausführungsform wird für die Herstellung Composite basierter Hohlprofile als Thermoplast wenigstens Polyethylen (PE) eingesetzt. Polyethylen [CAS Nr. 9002-88-4] ist ein teilkristalliner und unpolarer Thermoplast. Durch die Wahl der Polymerisationsbedingungen lassen sich Molmasse, Molmassenverteilung, mittlere Kettenlänge und Verzweigungsgrad einstellen. Aufgrund der unterschiedlichen Dichte unterscheidet man vier Haupttypen, wobei die Kurzbezeichnungen nicht immer einheitlich verwendet werden:

- Polyethylen hoher Dichte (high density), PE-HD oder HDPE

- Polyethylen mittlerer Dichte (medium density), PE-MD oder MDPE

- Polyethylen niedriger Dichte (low density), PE-LD oder LDPE

- lineares Polyethylen mit niedriger Dichte (linear, low density), PE-LLD oder LLDPE.

Erfindungsgemäß als Matrixpolymer einzusetzende Polyethylene sind ganz besonders bevorzugt HDPE oder LDPE.

In einer Ausführungsform wird für die Herstellung Composite basierter Hohlprofile als Thermoplast wenigstens Polypropylen (PP) eingesetzt. PP [CAS Nr. 9003-07-0] ist ein teilkristalliner Thermoplast und gehört zu der Gruppe der Polyolefine. Polypropylen wird durch Polymerisation des Monomers Propen mit Hilfe von Katalysatoren gewonnen.

In einer Ausführungsform wird für die Herstellung Composite basierter Hohlprofile als Thermoplast der Matrix wenigstens ein Polycarbonat (PC) eingesetzt. Besonders bevorzugt werden Polycarbonate auf Basis von 2,2-Bis(4-hydroxyphenyl)-propan (Bisphenol A), Bis(4-hydroxyphenyl)sulfon (Bisphenol S), Dihydroxydiphenylsulfid, Tetramethylbisphenol A, 1,1-Bis(4-hydroxyphenyl)-3,3,5-trimethylcyclohexan (BPTMC) oder 1,1,1-Tris(4-hydroxyphenyl)-ethan (THPE) eingesetzt. Insbesondere bevorzugt wird PC auf Basis von Bisphenol A eingesetzt. Erfindungsgemäß einzusetzendes PC ist beispielsweise unter der Bezeichnung Makrolon® bei der Covestro AG, Leverkusen erhältlich.

In einer Ausführungsform wird für die Herstellung Composite basierter Hohlprofile als Thermoplast der Matrix wenigstens Polybutylenterephthalat (PBT) [CAS Nr. 24968-12-5] eingesetzt. PBT entsteht durch Polykondensation des Zwischenprodukts Bis(4-hydroxybutyl)terephthalsäureester. Letzterer kann durch Veresterung von 1,4-Butandiol und Terephthalsäure oder durch katalytische Umesterung von Dimethylterephthalat mit 1,4-Butandiol in Gegenwart von Umesterungskatalysatoren wie z. B. Tetraisopropyltitanat hergestellt werden. Besonders bevorzugt einzusetzendes PBT enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Butandiol-1,4-glykol Reste. Erfindungsgemäß einzusetzendes PBT ist beispielweise unter der Bezeichnung Pocan® bei der Lanxess Deutschland GmbH, Köln, erhältlich.

In einer Ausführungsform wird für die Herstellung Composite basierter Hohlprofile als Thermoplast der Matrix wenigstens Polyethylenterephthalat (PET) eingesetzt. PET [CAS Nr. 25038-59-9] ist ein durch Polykondensation hergestelltes thermoplastisches Polymer aus der Familie der Polyester auf Basis der Monomere Ethylenglycol und Terephthalsäure. Besonders bevorzugt einzusetzendes PET enthält mindestens 80 Mol-%, vorzugsweise mindestens 90 Mol-%, bezogen auf die Dicarbonsäure, Terephthalsäurereste und mindestens 90 Mol-%, bezogen auf die Diolkomponente, Ethylenglykolreste. PET kann beispielsweise von Ticona GmbH in Sulzbach, bezogen werden.

In einer Ausführungsform wird für die Herstellung Composite basierter Hohlprofile als Thermoplast der Matrix Polyvinylchlorid (PVC), [CAS Nr. 9002-86-2] eingesetzt. Als amorpher, thermoplastischer Kunststoff ist PVC hart und spröde und wird erst durch Zugabe von Weichmachern und Stabilisatoren weich, formbar und für technische Anwendungen geeignet. Bekannt ist PVC durch seine Verwendung in Fußbodenbelägen, zu Fensterprofilen, Rohren, für Kabelisolierungen und -ummantelungen sowie für Schallplatten. Erfindungsgemäß bevorzugt wird Hart-PVC (PVC-U) eingesetzt, wie es üblicherweise für Rohre und Profile verwendet wird. Hart-PVC Rohre als Hohlprofil sind beispielsweise bei der ThyssenKrupp Plastics Germany in Köln, erhältlich.

Die wenigstens eine Biegung W wird vorzugsweise vor Verfahrensschritt c) am bereitgestellten Hohlprofil, vorzugsweise Rohr, eingebracht, entweder vor dem Einbringen der Perforation 2 oder danach. Vorzugsweise weist die wenigstens eine Biegung W eine Abweichung von der geraden Längsachse L im Bereich von 1° bis 180° auf. Unter Anpassung des Spritzgießwerkzeugs sind aber auch Abweichungen von der geraden Längsachse von über 180° möglich, um Verbundbauteile in Form einer Schnecke oder kreisbogenförmige Strukturen zu erzielen. Beispielhaft wird ein Verformen eines Rohres in der bereits oben zitierten DE 19 946 011 A1 oder in DE 10 2013 212758 A1 beschrieben.

**Verfahrensschritt c)**

Im Verfahrensschritt c) erfolgt das Einlegen des Hohlprofils (1) in die wenigstens eine Kavität des Spritzgießwerkzeugs.

Neben der Gestaltung eines in Verfahrensschritt b) bereitzustellenden Hohlprofils (1) ist deshalb ebenso die Gestaltung eines in Verfahrensschritt a) bereitzustellenden Spritzgießwerkzeugs wichtig, damit das erfindungsgemäße Verfahren, insbesondere das Einlegen und das Abdichten der Werkzeugkavität, problemlos funktioniert.

Das Einlegen des Hohlprofils (**1**) in die Kavität erfolgt dabei **ohne** dass eine Aufweitung desselben erfolgt. Das Abdichten der Fuge zwischen dem Hohlprofil (**1**) und der Kavität des Spritzgießwerkzeugs erfolgt ausschließlich durch Formänderung des Hohlprofilumfangsmaßes (**UH**), wobei der Umfang des Hohlprofils selbst gleich bleibt.

Im Falle des bevorzugten Einsatzes von Hohlprofilen mit rundem Hohlprofilumfangsmaß, also in Form eines Rohrs, erfolgt eine Formänderung vorzugsweise zu einer Ellipse. Im Falle des Einsatzes von Hohlprofilen mit elliptischem Hohlprofilumfangsmaß erfolgt die Formänderung vorzugsweise zu einem runden Umfang. Vorzugsweise wird ein als Rohr einzusetzendes Hohlprofil mit wenigstens einem Kulissenschieber im Spritzgießwerkzeug fixiert.

Vorzugsweise liegt das Verhältnis des Hohlprofilumfangsmaßes (**UH**) zum Kavitätsumfangsmaß (**UW**) des Spritzgießwerkzeugs an den Werkzeugkontaktflächen (**K**) im Bereich von 1 : 1 bis 1,1 : 1.

Es ist für den Fachmann außerordentlich überraschend, dass selbst bei einem toleranzbedingten Übermaß des Hohlprofilumfangsmaßes (**UH**) gegenüber dem Kavitätsumfangsmaß (**UW**) der Spalt bzw. die Fuge zuverlässig verschlossen und damit für den Spritzgießvorgang abgedichtet wird. Toleranzbedingtes Übermaß ist beim erfindungsgemäßen Verfahren unerheblich.

Aufgrund des erfindungsgemäßen Einspritzens von Kunststoff in das Hohlprofil (**1**) im Verfahrensschritt e) wird überschüssiges Kunststoffmaterial nicht in die Trennebenen des Spritzgießwerkzeugs hineingepresst. Aufgrund wenigstens einer vorgesehenen Perforation 2 in der Hohlprofilwandung zwecks gleichzeitiger Ausgestaltung von wenigstens einem Funktionselement (**3**) am Hohlprofil (**1**), füllt der Kunststoff zuerst die dafür vorgesehene(n) Kavität(en) aus. Diese Eigenschaft des erfindungsgemäßen Verfahrens, die Formänderung des Hohlprofils (**1**) mit dem Schließen des Spritzgießwerkzeugs, und damit gleichzeitig das Abdichten der Spritzgießwerkzeugkavität gegenüber der Hohlprofilaußenfläche erlaubt das gleichzeitige Ausgestalten von Funktionselement(en) (**3**), das bzw. die mit dem die Innenfläche (**7**) des Hohlprofils (**1**) überziehenden Kunststoffauftrag fest verbunden ist bzw. sind. Gegenüber dem Stand der Technik sind keine zusätzlichen Verfahrensschritte erforderlich, die Zykluszeiten werden erheblich verkürzt.

Vorzugsweise weist ein erfindungsgemäß einzusetzendes Spritzgießwerkzeug und auch ein erfindungsgemäß einzusetzendes Hohlprofil (**1**) folgende Merkmale auf, damit sich Letzteres mit all seinen Maß- und Formtoleranzen ohne Zwang in das in Verfahrensschritt a) bereitgestellte Werkzeug einlegen lässt:

I. Das Spritzgießwerkzeug muss so beschaffen sein, dass es die Nebenkavitäten für Funktionselemente beim Schließen des Werkzeugs abdichtet. Dazu sind im Spritzgießwerkzeug an den axialen Enden der Nebenkavitäten Kontaktflächen im Spritzgießwerkzeug notwendig, die das Hohlprofil (**1**) während des Schließens des Spritzgießwerkzeugs in Schließrichtung vom Außendurchmesser (**C**) auf das Werkzeugmaß (**A**) verpressen, wodurch sich gleichzeitig der Außendurchmesser (**C**) rechtwinklig zur Schließrichtung auf das Werkzeugmaß (**B**) ändert.

II. In einer Ausführungsform sind die Kontaktflächen der wenigstens zwei Spritzgießwerkzeughälften zum Hohlprofil (**1**) im Spritzgießwerkzeug so ausgeführt, dass das Hohlprofil (**1**) über die in I. beschriebene Verpressung hinaus in eine Form um einen Bereich von - 0,01 bis -1% von Werkzeugmaß (**A**) und Werkzeugmaß (**B**) zusätzlich verpresst wird.

III. Die in I. und II. genannten Kontaktflächen der wenigstens zwei Spritzgießwerkzeughälften im Spritzgießwerkzeug umfassen das Hohlprofil (**1**) bei geschlossenem Werkzeug in seinem gesamten Umfang und weisen vorzugsweise eine Breite, d. h. eine Ausdehnung in axialer Richtung des Hohlprofils gesehen, im Bereich von 1,0 bis 10,0 mm auf

IV. In einer Ausführungsform sind die Kontaktflächen der wenigstens zwei Spritzgießwerkzeughälften zum Hohlprofil im Spritzgießwerkzeug so ausgeführt, dass diese Bereiche im Spritzgießwerkzeug durch gehärtete Einsätze dargestellt werden. Die gehärteten Einsätze weisen vorzugsweise eine Härte nach Rockwell im Bereich von 50 bis 62 HRC auf. Damit liegt die Härte im Bereich üblicher Biege- und Stanzwerkzeuge. Siehe: **https://de.wikipedia.org/wiki/Rockwell_(Einheit).**

V. Vorzugsweise bietet das Spritzgießwerkzeug zwischen seinen Kontaktflächen (**K**) außerhalb der Kavitäten einen Freiraum rund um das Hohlprofil (**1**) herum. Vorzugsweise beträgt bzw. liegt dieser Freiraum im Bereich von 1,0 bis 10,0 mm.

**Verfahrensschritt d)**

Im Verfahrensschritt d) erfolgt das Schließen des Spritzgießwerkzeugs und das Verpressen des Hohlprofils (**1**) in Schließrichtung der wenigstens einen für das Hohlprofil (**1**) vorgesehenen Kavität. Vorzugsweise erfolgt das Verpressen zudem an den in den Ausführungen zu Verfahrensschritt c) unter I. beschriebenen Kontaktflächen seitlich der Nebenkavität/en.

Vorzugsweise werden Kulissenschieber im Spritzgießwerkzeug eingesetzt, um das Hohlprofil (**1**) in der Spritzgießkavität im Verfahrensschritt d) eindeutig zu fixieren bzw. zu positionieren. Der Einsatz von Kulissenschiebern im Spritzguss ist dem Fachmann beispielsweise aus DE 3638958 A1 bekannt.

Mittels der unter Verfahrensschritt c) beschriebenen Kontaktflächen (**K**) im Spritzgießwerkzeug wird im Verfahrensschritt d) das Hohlprofil (**1**) eindeutig in der Kavität des Spritzgießwerkzeugs gehalten und die für das Spritzgießen vorgesehenen Kavitäten am Hohlprofil (**1**) werden abgedichtet.

Für das Schließen des Spritzgießwerkzeugs und das Verpressen in Verfahrensschritt d) wird eine Presskraft benötigt, die das Hohlprofil (**1**) an seinen Werkzeugkontaktflächen (**K**) in eine durch die Ausgestaltung der Kavität des Spritzgießwerkzeugs definierte neue Form presst, sowie eine Schließkraft für den Spritzgießprozess, um die wenigstens eine Kavität für das Hohlprofil sowie gegebenenfalls die wenigstens eine Nebenkavität für wenigstens ein Funktionselement (**3**) abzudichten. Die Höhe der in Verfahrensschritt d) aufzuwendenden Presskraft richtet sich nach der Form eines in Verfahrensschritt b) bereitgestellten Hohlprofils (**1**). Ferner sind Gestalt, Dimensionen und Materialbeschaffenheit des erfindungsgemäß einzusetzenden Hohlprofils für die Vorauskalkulation der in Verfahrensschritt d) anzuwendenden Presskraft entscheidend, die der Fachmann bei der Auslegung des erfindungsgemäßen Prozesses berücksichtigen muss.

Im Gegensatz zum Stand der Technik richtet sich beim erfindungsgemäßen Verfahren die Höhe der Schließkraft des Spritzgießwerkzeugs nicht nach der projizierten Fläche des Kunststoffauftrags, da Funktionselemente (**3**) vom Innern des Hohlprofils heraus direkt mitgeformt werden.

In einer Ausführungsform liegt die in Verfahrensschritt d) für das Verpressen anzuwendende Presskraft unterhalb der Schließkraft des Spritzgießwerkzeugs.

Erfindungsgemäß bevorzugt erfolgt das Verpressen in Verfahrensschritt d) bis folgendes gilt: Außendurchmesser (**C**) entspricht Werkzeugmaß (**A**). Dieses Maß stellt sich immer bei vollkommen geschlossenem Werkzeug ein. Hierbei entstehen keine Toleranzen.

Besonders bevorzugt erfolgt das Verpressen in Verfahrensschritt d) bis folgendes gilt: Außendurchmesser (**C**) entspricht Werkzeugmaß (**A**) und Außendurchmesser (**C**) wird rechtwinklig zur Schließrichtung auf das Werkzeugmaß (**B**) gepresst. Dabei entspricht das Hohlprofilumfangsmaß (**UH**) dem Kavitätumfangsmaß des Werkzeuges (**UW**). In diesem Fall ist die Kavität zum Hohlprofil umfänglich abgedichtet.

Tritt der Fall ein, dass das Außendurchmesser (**C**) zu klein oder das Kavitätumfangsmaß des Werkzeuges UW zu groß ist und die Verformung durch das Spritzgießwerkzeug nicht ausreicht, um als Ergebnis Hohlprofilumfangsmaß (**UH**) = Kavitätumfangsmaß (**UW**) zu erreichen, so verbliebe ein Spalt. In diesem Fall müssen die Toleranzen des Hohlprofils so gewählt werden, das dieser Fall nicht eintritt.

Ist der Außendurchmesser (**C**) des Hohlprofils zu groß gewählt, dann erreicht der Außendurchmesser (**C**) das Werkzeugmaß (**B**) bevor das Werkzeug vollständig geschlossen ist, was zu einer tangentialen Stauchung der Hohlprofilwandung führt. Auch in diesem Fall sind deshalb die Toleranzen des Hohlprofils (**1**) so zu wählen, dass ein Stauchen maximal bis zur Druckdehnung des Materials eintritt, aber kein Ausweichen der Hohlprofilwandung in Hohlräume zwischen die Trennflächen des Spritzgießwerkzeugs eintritt.

Das Abdichten der Mantelflächen an den Enden des Hohlprofils (**1**) erfolgt erfindungsgemäß über das Verpressen an den Kontaktflächen.

**Verfahrensschritt e)**

Im Verfahrensschritt e) erfolgt das Einspritzen von Kunststoff in Form einer Schmelze. Vorzugsweise erfolgt das Einspritzen von wenigstens einer der beiden Stirnseiten bzw. seitlichen Öffnungen des Hohlprofils (**1**) oder durch wenigstens eine Perforation (**2**). Dabei wird das Hohlprofil (**1**) von innen her an die Wandung des Spritzgießwerkzeugs gedrückt. Ein Kollabieren des Hohlprofils (**1**), wie es durch äußeres Auftragen von Kunststoff auf das Hohlprofil gemäß dem Stand der Technik auftreten kann, ist nach dem erfindungsgemäßen Verfahren ausgeschlossen.

Beim erfindungsgemäßen Verfahren fließt im Verfahrensschritt e) der schmelzflüssige Kunststoff im Hohlprofil (**1**) entlang seiner Wand der Innenfläche (**7**) sowie durch die wenigstens eine Perforation (**2**) entlang seiner Längsachse (**L**) in die wenigstens eine Nebenkavität. Auf diese Weise wird in Verfahrensschritt e) in einem Arbeitsgang sowohl der Hohlraum des Hohlprofils (**1**), als auch die wenigstens eine Nebenkavität mit plastifiziertem Kunststoff gefüllt. Im Falle des Einspritzens durch eine Perforation 2 ist wenigstens eine weitere Perforation (**2**) zum Befüllen einer Nebenkavität erforderlich.

Die in Verfahrensschritt e) anzuwendenden Drücke, Temperaturen und Volumina des Kunststoffeintrags in das Hohlprofil sind abhängig von den einzusetzenden Kunststoffmaterialien und der Geometrie des mit Kunststoff zu füllenden Hohlprofils sowie der mit Kunststoff zu füllenden Nebenkavität(en). Die einzusetzenden Kunststoffmengen muss der Fachmann bei der Auslegung des erfindungsgemäßen Spritzgießprozesses im Voraus berücksichtigen bzw. kalkulieren. Der zum Befüllen des Hohlprofils (**1**) mit Kunststoffmaterial erforderliche Spritzdruck wirkt auf die Innenfläche (**7**) der Wandung des Hohlprofils (**1**). An den Werkzeugkontaktflächen (**K**) besteht eine Abstützung von außen. Zwischen den Kontaktflächen außerhalb der Kavitäten bietet das Spritgießwerkzeug vorzugsweise einen Freiraum im Bereich von 1,0 bis 10,0 mm. Vorzugsweise ist das Hohlprofil (**1**) so dimensioniert, dass zwischen den Werkzeugkontaktflächen (**K**) außerhalb der Kavitäten ein Aufplatzen durch den Spritzdruck nicht stattfindet, oder der Freiraum ist so dimensioniert dass die Bruchdehnung des Hohlprofilmaterials nicht erreicht wird.

Durch das Verpressen des Hohlprofils (**1**) in Verfahrensschritt d), insbesondere mittels der in Verfahrensschritt c) beschriebenen Werkzeugkontaktflächen (**K**) während des Schließens des Spritzgießwerkzeugs, wird eine Abdichtung gegen Austreten des in Verfahrensschritt e) erfolgenden Kunststoffeintrags erzielt. In einer Ausführungsform sind die Werkzeugkontaktflächen (**K**) so ausgeführt, dass diese Bereiche im Werkzeug durch gehärtete Einsätze dargestellt werden.

In einer alternativen oder bevorzugten Ausführungsform werden durch entsprechend angeordnete Nebenkavität(en) Biegungen des Hohlprofils (**1**) über wenigstens eine Perforation (**2**) im Hohlprofil von innen heraus mit Kunststoff befüllt. Bei entsprechender Ausgestaltung dieser Nebenkavität(en) lassen sich auf diese Weise Biegungen im Hohlprofil (**1**) sowohl von der Innenseite, als auch von der Außenseite des Hohlprofils (**1**) mit Kunststoff überziehen, wodurch ein Verbundbauteil mit Biegung(en), insbesondere an den Biegungspositionen, zusätzlich stabilisiert wird.

Die in den Ausführungen zu Verfahrensschritt c) unter Punkt IV. beschriebene Ausführung gehärteter Werkzeugeinsätze dient im Verfahrensschritt e) der Reduzierung des Verschleißes der Werkzeugkontaktflächen (**K**), da dies die einzigen Kontaktstellen zwischen Spritzgießwerkzeug und Hohlprofil (**1**) sind und die gehärteten Werkzeugeinsätze vorzugsweise eine deutlich höhere Härte besitzen, als der Werkstoff des Hohlprofils.

Während des Kunststoffeintrags ins Hohlprofil (**1**) im Verfahrensschritt e) baut sich innerhalb des Hohlprofils (**1**) ein Druck auf, der die Außenwand des Hohlprofils (**1**) gegen die Werkzeugkontaktflächen (**K**) drückt Das Hohlprofil (**1**) selbst dient als Angusskanal und als Hauptverteilerkanal wenn die wenigstens eine Nebenkavitäten für Funktionselemente (**3**) am Verbundbauteil von innen nach außen ebenfalls mit Kunststoff befüllt wird. Der Kunststoffeintrag ins Hohlprofil (**1**) erfolgt erfindungsgemäß durch Spritzgießen.

In einer alternativen Ausführungsform erfolgt im Verfahrensschritt e) das Einspritzen des Kunststoffs durch wenigstens eine Perforation (**2**) im Hohlprofil, wobei nur die Injektion von Gas und/oder Fluid von wenigstens einer der Stirnseiten des Hohlprofils (**1**) erfolgt, mit Überlauf des Kunststoffs an der gegenüberliegenden Stirnseite im darauf folgenden Verfahrensschritt f).

Mittels der wenigstens einen Perforation (**2**) anzuspritzende Funktionselemente (**3**) sind vorzugsweise Strukturen, Befestigungs- oder Halteelemente für zu montierende Anbauteile oder für das Verbundbauteil selbst, insbesondere Schraubdome, Schnapphaken, Schweiß- oder Dichtflächen, Kupplungselemente für die Montage von Rohrleitungen oder Schläuchen, Lagerstellen, Achsen, Gehäuse, Gehäusehälften, Positionierhilfen, Montagehilfen, Stifte, Zapfen, Konen, Dreh-, Angel- und Scharnierelemente für Kappen, Deckel oder Ventile, wobei diese Aufzählung nicht abschließend ist.

## Spritzgießen

Nach **DIN 8580** werden Fertigungsverfahren zur Herstellung geometrischer fester Körper in 6 Hauptgruppen unterteilt. Das Spritzgießen ist der Hauptgruppe 2, dem Urformen zugeordnet. Es eignet sich insbesondere für Massenartikel. Die Nacharbeit beim Spritzgießen ist gering bzw. kann ganz entfallen und selbst komplizierte Formen und Konturen können in einem Arbeitsgang gefertigt werden. Das Spritzgießen als Fertigungsverfahren in der Kunststoffverarbeitung ist dem Fachmann prinzipiell bekannt;
Siehe: **https://de.wikipedia.org/wiki/Spritzgie%C3%9Fen.**

Beim Spritzgießen wird mit einer Spritzgießmaschine der zu verarbeitende Kunststoff verflüssigt bzw. plastifiziert und in eine Form, dem Spritzgießwerkzeug, unter Druck eingespritzt. Im Spritzgießwerkzeug, bzw. im Rahmen dieser Erfindung auch einfach als Werkzeug bezeichnet, geht der plastifizierte Kunststoff durch Abkühlung oder durch eine Vernetzungsreaktion wieder in den festen Zustand über und wird nach dem Öffnen des Werkzeugs als Fertigteil entnommen. Der Hohlraum bzw. die Kavität des eingesetzten Werkzeugs bestimmt dabei die Form und die Oberflächenstruktur des erstarrten Kunststoffs im Enderzeugnis, in der vorliegenden Erfindung im Verbundbauteil. Es sind heute durch Spritzgießen Erzeugnisse im Gewichtsbereich von wenigen zehntel Gramm bis zu einer Größenordnung von 150 kg herstellbar.

Das Spritzgießen, insbesondere erweiterte spezielle Spritzgießverfahren, erlaubt eine nahezu freie Wahl von Form und Oberflächenstruktur, insbesondere glatte Oberflächen, Narbungen für berührungsfreundliche Bereiche, Muster, Gravuren und Farbeffekte. Zusammen mit seiner Wirtschaftlichkeit macht dies das Spritzgießen zum weitverbreitetsten Verfahren zur Massenherstellung von Kunststoffteilen in praktisch allen Bereichen.

Eine Spritzgießapparatur umfasst wenigstens folgende Bauteile: 1. Schnecke 2. Einfülltrichter 3. Granulat 4. Plastifizierzylinder 5. Heizelemente 6. Werkzeug.

Innerhalb einer Spritzgießapparatur erfolgen die Schritte 1. Plastifizieren und Dosieren, 2. Einspritzen, 3. Nachdrücken und Abkühlen, und 4. Entformen.

## 1. Plastifizieren und Dosieren

Der für das Spritzgießen im Rahmen der vorliegenden Erfindung vorzugsweise einzusetzende thermoplastische Kunststoff rieselt in Form eines Granulats in die Gänge einer rotierenden Schnecke ein. Das Granulat wird in Richtung Schneckenspitze gefördert und durch die Wärme des Zylinders und die Friktionswärme, die beim Zerteilen und Scheren des Materials entsteht, erwärmt und aufgeschmolzen. Die Schmelze sammelt sich vor der Schneckenspitze, da die Austrittsdüse zunächst geschlossen ist. Da die Schnecke axial beweglich ist, weicht sie durch den Druck zurück und schraubt sich ähnlich einem Korkenzieher aus der Masse heraus. Die Rückwärtsbewegung wird durch einen Hydraulikzylinder oder elektrisch gebremst, so dass sich in der Schmelze ein Staudruck aufbaut. Dieser Staudruck in Verbindung mit der Schneckenrotation verdichtet und homogenisiert den als Spritzgießmaterial zu verspritzenden Kunststoff.

Die Schneckenposition wird gemessen und sobald sich eine für das Werkstückvolumen ausreichende Spritzgießmaterialmenge angesammelt hat, ist der Dosiervorgang beendet und die Schneckenrotation wird eingestellt. Ebenso wird die Schnecke aktiv oder passiv entlastet, so dass die Schmelze dekomprimiert wird.

## 2. Einspritzen

In der Einspritzphase wird die Spritzeinheit an die Schließeinheit gefahren, mit der Austrittsdüse angedrückt und die Schnecke rückseitig unter Druck gesetzt. Dabei wird die Schmelze unter hohem Druck, vorzugsweise bei einem Druck im Bereich von 300 bis 2000bar, durch die geöffnete Austrittsdüse und den Anguss bzw. das Angusssystem des Spritzgießwerkzeugs in den formgebenden Hohlraum gedrückt. Eine Rückstromsperre verhindert dabei ein Zurückströmen der Schmelze in Richtung Einfülltrichter.

Während des Einspritzens wird versucht, ein möglichst laminares Fließverhalten der Schmelze zu erreichen. Das heißt, die Schmelze wird im Spritzgießwerkzeug dort, wo sie die gekühlte Werkzeugwand berührt, sofort abgekühlt und bleibt erstarrt "kleben". Die nachrückende Schmelze wird durch den dadurch verjüngten Schmelzkanal mit noch höherer Geschwindigkeit und noch mehr Scherdeformation gedrückt und vorne an der Schmelzfront zum Rand hin dehndeformiert. Es überlagert sich Wärmeabfuhr über die Werkzeugwand und Wärmezufuhr durch Schererwärmung. Die hohe Einspritzgeschwindigkeit erzeugt in der Schmelze eine Schergeschwindigkeit, welche die Schmelze leichter fließen lässt. Ein schnelles Einspritzen ist nicht anzustreben, denn durch hohe Schergeschwindigkeiten kann ein Molekülabbau innerhalb des Kunststoffs verstärkt auftreten. Auch die Oberfläche des durch Spritzguss herzustellenden Erzeugnisses, dessen Aussehen und schließlich der Orientierungszustand der Kunststoffmoleküle werden durch die Einspritzphase beeinflusst.

### 3. Nachdrücken und Abkühlen

Da das Werkzeug kälter ist als die Kunststoffmasse, vorzugsweise weist das Werkzeug eine Temperatur im Bereich von 20 bis 120°C auf und die Kunststoffmasse weist vorzugsweise eine Temperatur im Bereich von 200 bis 300°C auf, kühlt die Schmelze in der Form ab und erstarrt bei Erreichen des Erstarrungspunkts des jeweils eingesetzten Kunststoffs, vorzugsweise des Thermoplasten bzw. des Thermoplast basierten Compounds.

Compoundieren ist ein Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern und umfasst die Verfahrensoperationen Fördern, Aufschmelzen, Dispergieren, Mischen, Entgasen und Druckaufbau. siehe: **https://de.wikipedia.org/wiki/Compoundierung**. Mit Compound bezeichnet man deshalb einen mit Füllstoffen oder Additiven versetzten Thermoplasten oder Duroplasten.

Das Abkühlen bei Erreichen des Erstarrungspunkts des jeweils eingesetzten Kunststoffs geht einher mit einer Volumenschwindung, die sich nachteilig auf Maßhaltigkeit und Oberflächenqualität des zu fertigenden Erzeugnisses auswirkt. Um diese Schwindung teilweise zu kompensieren, wird auch nach Füllung des Hohlprofils sowie der wenigstens einen Nebenkavität ein reduzierter Druck aufrechterhalten, damit Kunststoffmaterial nachfließen und die Schwindung ausgleichen kann. Dieses Nachdrücken kann solange erfolgen, bis der Anguss erstarrt ist.

Nach Beendigung des Nachdrückens kann die Austrittsdüse geschlossen werden und in der Spritzeinheit bereits der Plastifizier- und Dosiervorgang für das nächste Formteil beginnen. Das Kunststoffmaterial im Hohlprofil sowie in der Ausgestaltung des wenigstens einen Funktionselements kühlt in der Restkühlzeit weiter ab, bis auch die Seele, der flüssige Kern des Kunststoffs, erstarrt ist und eine zum Entformen hinreichende Steifigkeit erreicht ist. Dieser Vorgang wird auch als Solidifikation bezeichnet.

Die Spritzgießeinheit kann dann von der Schließeinheit wegbewegt werden, da kein Kunststoff mehr aus dem Anguss austreten kann. Dies dient dazu, einen Wärmeübergang von der wärmeren Austrittsdüse auf den kälteren Anguss zu verhindern.

### 4. Entformen

Zum Entformen eines Verbundbauteils mit wenigstens einer Biegung und wenigstens einem Funktionselement öffnen sich die Kavitäten und das Erzeugnis wird durch in die Kavitäten eindringende Stifte ausgeworfen. Das Verbundbauteil fällt entweder aus dem Spritzgießwerkzeug heraus (Schüttgut), oder wird durch Handlinggeräte aus dem Spritzgießwerkzeug entnommen und geordnet abgelegt oder direkt einer Weiterverarbeitung zugeführt. Vorzugsweise ist dafür das Spritzgießwerkzeug mit einer Auswerferseite versehen.

Der beim Spritzguss zwangsläufig anfallende Anguss muss entweder durch separate Bearbeitung entfernt werden oder wird beim Entformen automatisch abgetrennt. Auch angussloses Spritzgießen ist mit Heißkanalsystemen, bei denen das Angusssystem ständig über der Erstarrungstemperatur des einzusetzenden Kunststoffs, vorzugsweise Thermoplasten, Duroplasten oder Compounds, bleibt und das enthaltene Material somit für den nächsten Schuss verwendet werden kann, möglich.

### Im Spritzgießen zu verarbeitende Kunststoffe

Im erfindungsgemäßen Spritzgießverfahren für den Kunststoffeintrag ins Hohlprofil einzusetzende Kunststoffe sind vorzugsweise Thermoplasten oder Duroplasten, besonders bevorzugt Thermoplasten.

Bevorzugte thermoplastische Kunststoffe sind Polyamide (PA), Polybutylenterephthalat (PBT), Polyethylenterephthalat (PET), Polyethylen (PE), Polypropylen (PP) und Polyvinylchlorid (PVC). Besonders bevorzugt wird als thermoplastischer Kunststoff für ein erfindungsgemäß einzusetzendes Hohlprofil Polyamid oder Polyester eingesetzt. Bevorzugt wird als Polyamid ein Polyamid 6 eingesetzt. Bevorzugt wird als Polyester Polybutylenterephthalat (PBT) oder Polyethylenterephthalat, insbesondere PBT, eingesetzt. Bevorzugte duroplastische Kunststoffe sind Epoxidharze, vernetzbare Polyurethane oder ungesättigte Polyesterharze.

Vorzugsweise wird der Thermoplast oder Duroplast in Form eines Compounds eingesetzt.

Besonders bevorzugt wird der in Verfahrensschritt e) einzusetzende Kunststoff aus einem thermoplastischen Kunststoff mit wenigstens einem Verstärkungsstoff hergestellt. Bevorzugt werden als Verstärkungsstoff Glasfasern eingesetzt. Insbesondere bevorzugt werden auf 100 Massenanteile des thermoplastischen Kunststoffs Verstärkungsstoffe in Mengen im Bereich von 0,1 bis 567 Massenanteilen eingesetzt. Ganz besonders bevorzugt werden als Verstärkungsstoff Kurzglasfasern oder Langglasfasern eingesetzt. Insbesondere bevorzugt werden auf 100 Massenanteile des thermoplastischen Kunststoffs Verstärkungsstoffe in Mengen im Bereich von 10 bis 400 Massenanteilen eingesetzt.

Insbesondere bevorzugt wird im Verfahrensschritt e) glasfaserverstärktes Polyamid 6 mit 10 bis 400 Massenanteilen Glasfasern auf 100 Massenanteile Polyamid im Spritzgießverfahren eingesetzt. Derartige Compounds sind erhältlich unter der Bezeichnung Durethan® bei der Lanxess Deutschland GmbH, Köln.

Alternativ kann in Verfahrensschritt e) eine Kunststoffschmelze aus einem duroplastischen Kunststoff eingesetzt werden. Bevorzugt werden in diesem Fall Epoxidharze, vernetzbare Polyurethane und ungesättigte Polyesterharze eingesetzt.

Besonders bevorzugt erfolgt der Einsatz eines duroplastischen Kunststoffs in Verfahrensschritt e) mit wenigstens einem Verstärkungsstoff. Bevorzugt werden in diesem Fall als Verstärkungsstoff Glasfasern oder Kohlefasern eingesetzt, insbesondere Glasfasern.

Insbesondere bevorzugt werden auf 100 Massenanteile des duroplastischen Kunststoffs 10 bis 100 Massenanteile Glasfasern oder Kohlefasern als Verstärkungsstoff eingesetzt.

**Verfahrensschritt f)**

Im Verfahrensschritt f) erfolgt das Herausdrücken von überschüssigem Kunststoff durch wenigstens eine der beiden seitlichen Öffnungen bzw. Stirnseiten des Hohlprofils (**1**) mittels Injektion von Gas oder Fluid. Hierfür weist wenigstens eine Stirnseite eine Gas- oder Fluid-Injektionseinheit auf. Vorzugsweise befindet sich diese Gas- oder Fluid-Injektionseinheit an der gegenüberliegenden Stirnseite des Hohlprofils von der Stirnseite mit der Spritzgießeinheit aus betrachtet. Durch das Zuführen von Gas oder Fluid wird nach der Komplettfüllung des Hohlprofils Kunststoffmasse zurück in die Spritzgießeinheit gedrückt und steht damit im nächsten Zyklus wieder zur Verfügung. Die für das Gas bzw. Fluid anzuwendenden Drücke liegen im Bereich von 50 bis 500 bar. Das Verfahren dieser Gasinjektionstechnologie (GIT) oder Fluidinjektionstechnologie (FIT) ist dem Fachmann aus DE 100 24 224 B4 bzw. zur Fertigung von Frontends für Kraftfahrzeuge aus DE 10 2011 112 913 A1 bekannt. Vorzugsweise wird als Fluid Wasser eingesetzt, wofür der Begriff Wasserinjektionstechnologie (WIT) gebräuchlich ist. Als Resultat des Verfahrensschritt f) erhält man ein Verbundbauteil, das mit einem Kunststoffauftrag auf der Wandung der Innenfläche (**7**) des Hohlprofils (**1**) überzogen ist. Im Gegensatz zum Stand der Technik mit äußerlich lokalem Auftrag von Kunststoff erhält das Hohlprofil (**1**) und damit das Verbundbauteil nach dem erfindungsgemäßen Verfahren eine Stabilisierung durch Kunststoffauftrag auf der Wandung der Innenfläche (**7**) des Hohlprofils seine gesamte Längsachse (**L**) hinweg. Erfindungsgemäße Verbundbauteile sind somit deutlich stabiler als Verbundbauteile gemäß des oben beschriebenen Stands der Technik.

In bevorzugter Ausführungsform kann im Verfahrensschritt f) die Projektil-Injektionstechnik (PIT), vorzugsweise zusätzlich zum FIT, angewandt werden. Das PIT ist ein spezielles Sonderverfahren des FIT, bei dem mithilfe eines ins Fluid injizierten Projektils der noch schmelzeflüssige bzw. plastifizierte Kunststoff zur Bildung eines Hohlraums durch wenigstens eine der beiden seitlichen Öffnungen bzw. Stirnseiten des Hohlprofils wieder hinausgedrückt wird. Das Fluid treibt dabei das Projektil im plastifizierten Kunststoff vor sich her. Die resultierenden Kunststoffwandstärken werden durch das Projektil genau definiert und gleichmäßig erzeugt. Die wesentlichen Merkmale dieses Verfahrens sind kurze Zykluszeit durch Vermeidung von Masseanhäufungen, konstante Hohlraumquerschnitte entlang der Wandung der Innenfläche (**7**) des Hohlprofils (**1**). Die Möglichkeit der Ausbildung von Rohrabzweigungen, vorzugsweise zum Ausbilden von Funktionselementen, bleibt bestehen. Siehe: **Fachartikel: "**Projektil-Injektionstechnik geht in Serie", Kunststoffe 11/2006**.** Im Falle des PIT erfolgt im Verfahrensschritt f) die Injektion von Gas oder Flüssigkeit nur durch eine der beiden seitlichen Öffnungen bzw. Stirnseiten des Hohlprofils (**1**). Siehe auch DE 10 2014 226 500 A1.

Wird Verfahrensschritt e) in bevorzugter Ausführungsform mit glasfaserverstärktem Polyamid 6 enthaltend 15 bis 150 Massenanteile Glasfasern auf 100 Massenanteile Polyamid im Spritzgießverfahren durchgeführt, wendet man einen Spritzdruck im Bereich von 300 bis 1200bar spez., vorzugsweise 500 bis 800bar spez. an. Die Massetemperatur der Polyamidformmasse liegt dabei vorzugsweise im Bereich von 260 bis 300°C, die Werkzeugtemperatur liegt vorzugsweise im Bereich von 70 bis 90°C. Der Druck in den Hydraulikleitungen einer Spritzgießmaschine ist der hydraulische Druck. Der Druck, der über die rotierende Schnecke auf die Kunststoffschmelze wirkt, ist der spezifische Druck - abgekürzt mit spez..

**Verfahrensschritt g)**

Im Verfahrensschritt g) erfolgt das Abkühlen des Kunststoffs, auch als Solidifikation bezeichnet. Der Begriff der Solidifikation beschreibt das Erstarren des in Verfahrensschritt e) ins Hohlprofil (**1**) eingetragenen plastifizierten bzw. schmelzflüssigen Kunststoffs durch Abkühlen bzw. durch chemische Vernetzung zu einem Festkörper. Eine erfindungsgemäße schubsteife, schubfeste, hochbelastbare und formschlüssige Verbindung auf der Wandung der Innenfläche (**7**) des Hohlprofils (**1**) ist entstanden mit direkter Anbindung wenigstens eines Funktionselements (**3**), das bzw. die in wenigstens einer Nebenkavität über den Austritt des Kunststoffs aus dem Hohlprofil (**1**) durch wenigstens eine Perforation (**2**) gebildet wird bzw. werden.

Weitere Details zum Verfahrensschritt g) wurden bereits oben im Abschnitt **"Nachdrücken und Abkühlen"** beschrieben.

**Verfahrensschritt h)**

Im Verfahrensschritt h) wird das fertige Verbundteil aus dem Spritzgießwerkzeug entnommen, nachdem mit Erstarren der Kunststoffschmelze der Druck in der Kunststoffkomponente nicht mehr vorhanden ist und die Schließkraft mit dem Öffnen des Spritzgießwerkzeugs abgebaut wurde. Weitere Details wurden bereits oben im Abschnitt **"Entformen"** beschrieben.

Weil für den GIT Prozess mit großzügig dimensionierten Angussquerschnitten gearbeitet werden muss, erfolgt im Verfahrensschritt h) gegebenenfalls auch ein Abtrennen eines solchen Angusses wenigstens am Einspritzpunkt des Kunststoffs und in einer Ausführungsform auch am gegenüber liegenden Ende der Gasblase.

**Verbundbauteil**

Erfindungsgemäß herzustellende Verbundbauteile werden in entsprechender Gestaltung vorzugsweise für den Kraftfahrzeugbau, insbesondere im Automobilbau eingesetzt. Bevorzugt handelt es sich dabei um Karosserieteile, insbesondere um Cross Car Beams (CCB), auch als Instrumententafelquerträger bezeichnet, Frontends, Motorlager, Stabilisatoren, 2-Punkt Lenker, 3-Punkt Lenker, (Seiten)Aufprallträger, Crashelemente mit Strukturfunktion, Letztere vorzugsweise im Schwellerbereich, Fender Support, Pedale, wobei diese Aufzählung nicht vollständig ist. Bekannt sind Instrumententafelquerträger beispielsweise aus US 5934744 A oder US 8534739 **B**.

Im erfindungsgemäßen Verbundbauteil versteifen und verstärken sich das Hohlprofil und innenwandig aufgetragener Kunststoffeintrag gegenseitig. In einer bevorzugten Ausführungsform dient durch wenigstens eine Perforation (**2**) im Hohlprofil (**1**) von innen heraus außenwandig aufgetragener Kunststoff, insbesondere in Biegungen, zusätzlich zur Stabilisierung gebogener Verbundbauteile. Das erfindungsgemäße Verfahren ermöglicht zudem das gleichzeitige Ausgestalten von wenigstens einem Funktionselement unter Nutzung des Hohlprofils als Angusskanal und erlaubt damit eine Funktionsintegration im Sinne einer System- bzw. Modulbildung zur Anbindung von Kunststoffstrukturen oder Kunststoffflächen.

Bevorzugte Ausführungsformen eines erfindungsgemäß einzusetzenden Hohlprofils (**1**) weisen zusätzlich zur wenigstens einen Perforation (**2**) entweder Sicken oder ähnliche Verformungen und/oder Bohrungen oder ähnliche Öffnungen auf.

Besonders bevorzugte Ausführungsformen werden anhand der nachfolgenden Figuren beschrieben, wobei es sich stets um Verbundbauteil aus einem Hohlprofil (**1**) in Form eines Hohlzylinders mit wenigstens einer Biegung und einem auf der Innenseite (**7**) des Hohlprofils (**1**) aufgebrachten Kunststoffüberzug handelt, und das Hohlprofil (**1**) wenigstens ein Funktionselement (**3**) aufweist, das mit dem auf der Innenseite der Hohlprofils mittels GIT oder FIT oder einer Kombination von GIT und FIT eingebrachten Kunststoffüberzug über wenigstens eine Perforation (**2**) im Hohlprofil (**1**) direkt verbunden ist.

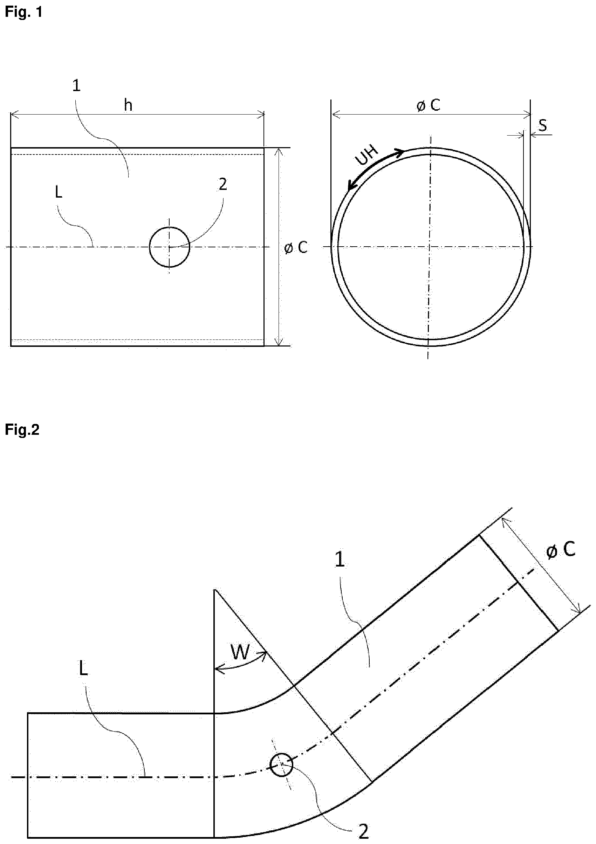

**Fig.1** zeigt einen Abschnitt ohne Biegung eines erfindungsgemäß einzusetzenden Hohlprofils (**1**) in Form eines Hohlzylinders mit einer Mittelachse (**L**), dem Außendurchmesser (**C**), der Wanddicke (**S**), einer Perforation (**2**) und dem Hohlprofilumfangsmaß **UH**.

**Fig.2** zeigt einen als Hohlprofil (**1**) einzusetzenden Hohlzylinder mit einer Biegung mit Winkel (**W**) entlang seiner Mittelachse (**L**) und einer Perforation (**2**).

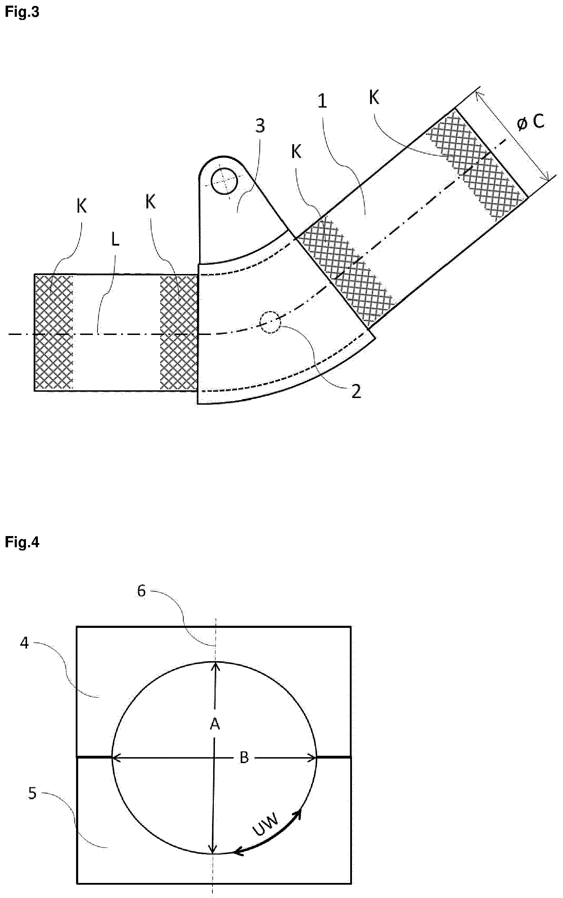

**Fig.3** zeigt ein erfindungsgemäßes Verbundbauteil auf Basis eines Hohlprofils (**1**) gemäß **Fig.2** mit einem angespritzten Funktionselement (**3**) und den Werkzeugkontaktflächen (**K**) am Hohlprofil (**1**).

**Fig.4** zeigt den Querschnitt eines erfindungsgemäß einzusetzenden Spritzgießwerkzeugs an den Kontaktflächen mit der Werkzeughälfte (**4**) und der Werkzeughälfte (**5**) in geschlossenem Zustand. Das Werkzeugmaß (**A**) ist um 0,1 bis 5 % kleiner als der Außendurchmesser (**C**), das Werkzeugmaß (**B**) ist um 0,1 bis 5 % größer als der Außendurchmesser (**C**) und das Kavitätumfangsmaß (**UW**) ist gleich dem Hohlprofilumfangsmaß (**UH**); es gilt: **UH = C · π.**

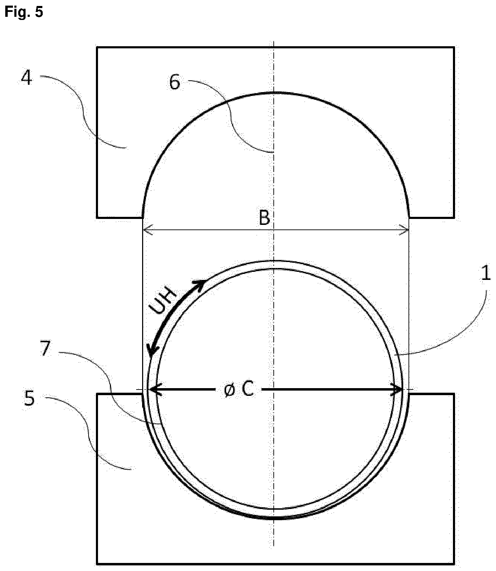

**Fig.5** zeigt den Querschnitt eines erfindungsgemäß einzusetzenden Spritzgießwerkzeugs mit den Werkzeughälften (**4**) und (**5**) im geöffneten Zustand an den Werkzeugkontaktflächen mit eingelegtem Hohlprofil (**1**) und dessen mit Kunststoff zu überspritzender Innenfläche (**7**). (**6**) steht für die Werkzeugschließrichtung. Für das Hohlprofilumfangsmaß gilt **UH = C · π.** Das Werkzeugmaß (**B**) ist um 0,1 bis 5 % größer als der Außendurchmesser (**C**).

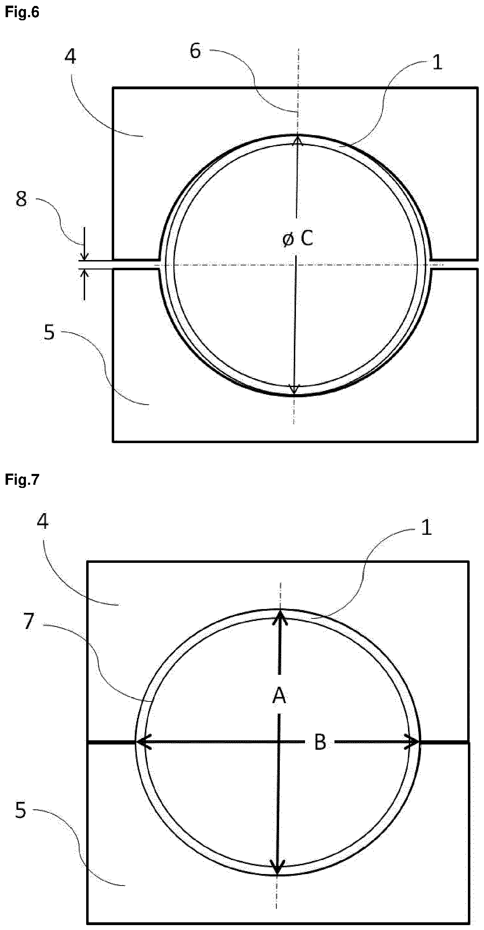

**Fig.6** zeigt die Lage eines erfindungsgemäß einzusetzenden Hohlprofils (**1**) an den Werkzeugkontaktflächen beim Werkzeugschließen wenn das Hohlprofil (**1**) zum erfindungsgemäßen Werkzeug mit den Werkzeughälften (**4**) und (**5**) erstmalig in Kontakt tritt. Zu diesem Zeitpunkt ist noch ein Werkzeugspalt (**8**) offen.

**Fig.7** zeigt die Lage und Form eines erfindungsgemäß einzusetzenden Hohlprofiles (**1**) an den Werkzeugkontaktflächen zum erfindungsgemäßen Werkzeug mit den Werkzeughälften (**4**) und (**5**) wenn das Werkzeug komplett geschlossen ist. Das Hohlprofil **1** mit dem ursprünglichen Außendurchmesser © ist an den Werkzeugkontaktflächen (**K**) in die Werkzeugkavität mit dem Werkzeugmaß (**A**) und dem Werkzeugmaß (**B**) gepresst (worden).

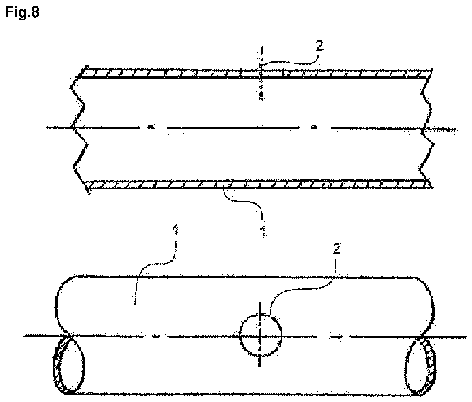

**Fig.8** zeigt den Abschnitt eines erfindungsgemäß vor Verfahrensschritt b) bereitzustellenden Hohlprofils (**1**) ohne gebogenem Abschnitt aber mit einer kreisrunden Perforation **2**, zwecks Anspritzen wenigstens eines Funktionselements (**3**).

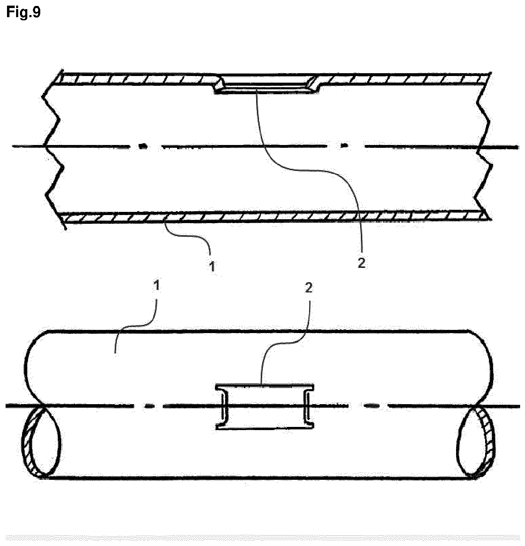

**Fig.9** zeigt eine zu **Fig.8** alternative Ausführungsform einen Bereich ohne Biegung eines erfindungsgemäß vor Verfahrensschritt b) bereitzustellenden Hohlprofils (**1**) mit einer rechteckigen Perforation (**2**). Die kurzen Seiten der rechteckigen Öffnung sind nach innen gebördelt, um einen verbesserten Formschluss zum in Verfahrensschritt e) ins Hohlprofil (**1**) einzuspritzenden Kunststoff zu gewährleisten.

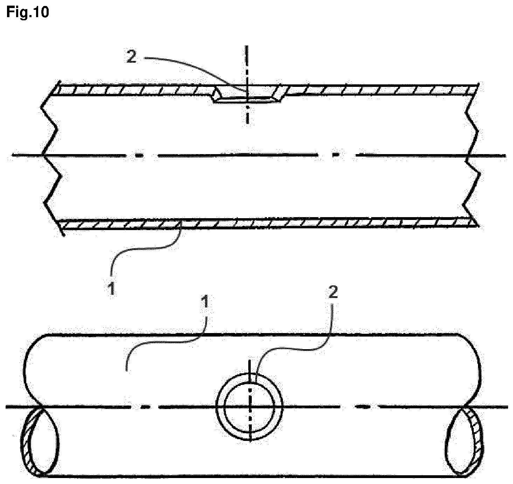

**Fig.10** entspricht im Wesentlichen der Darstellung in **Fig.8** und zeigt eine kreisrunde Perforation (**2**), deren Rand nach innen gebördelt ist, um einen verbesserten Formschluss zum in Verfahrensschritt e) ins Hohlprofil (**1**) einzuspritzenden Kunststoff zu gewährleisten.

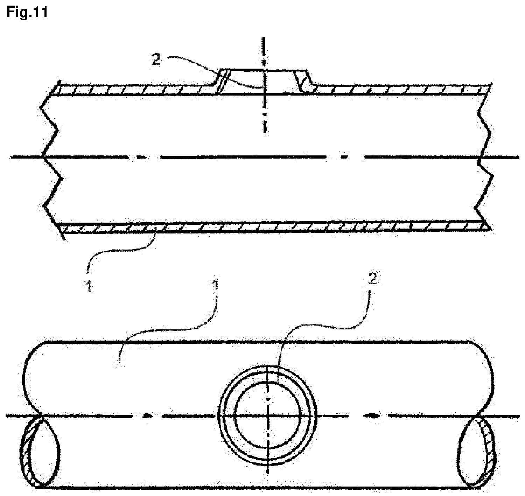

**Fig.11** entspricht im Wesentlichen der Darstellung in **Fig.8** und zeigt eine kreisrunde Perforation (**2**), deren Rand nach außen gebördelt ist um einen verbesserten Formschluss zum in Verfahrensschritt e) ins Hohlprofil (**1**) einzuspritzenden Kunststoff zu gewährleisten.

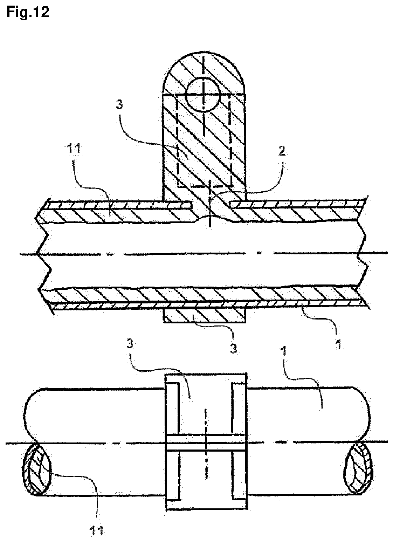

**Fig.12** zeigt den Bereich eines Verbundbauteils ohne gebogenem Abschnitt auf Basis eines Hohlprofils (**1**) mit einer kreisrunden Perforation (**2**) und einem angespritzten Funktionselement (**3**). Nach dem Einspritzen des Kunststoffs und dem Ausblasen von überschüssigem Kunststoff mit Gas gemäß Verfahrensschritt f) verbleibt im Inneren des Hohlprofils, d.h. auf der Wandung der Innenfläche (**7**), ein innerer Kunststoffüberzug (**11**).

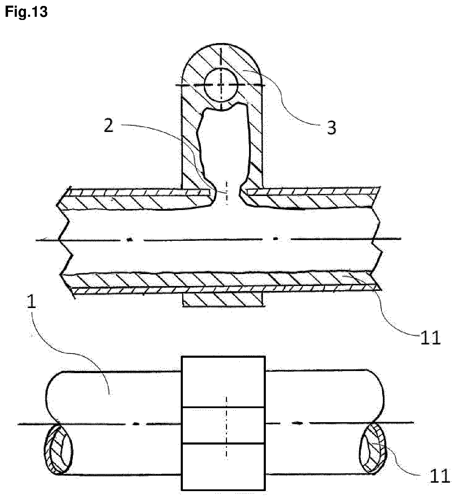

**Fig.13** zeigt den Bereich eines Verbundbauteils ohne gebogenem Abschnitt auf Basis eines Hohlprofils (**1**) mit einer kreisrunden Perforation (**2**) und einem angespritzten Funktionselement (**3**). Nach dem Einspritzen des Kunststoffs und dem Entfernen von überschüssigem Kunststoff mit Gas gemäß Verfahrensschritt f) verbleibt im Inneren des Hohlprofils, d.h. auf der Wandung der Innenfläche (**7**), ein innerer Kunststoffüberzug (**11**). Das angespritzte Funktionselement (**3**) wird gemäß der Darstellung in **Fig.13** mit ausgeblasen.

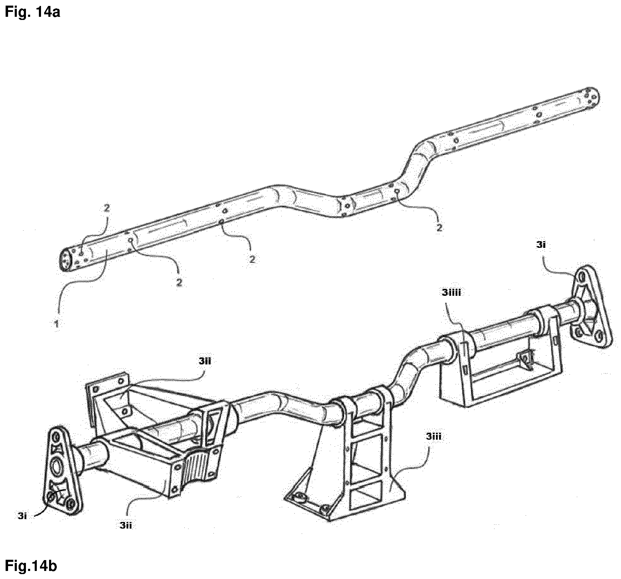

**Fig.14a** zeigt ein Hohlprofil **1** mit vier Biegungen und zahlreichen Perforationen (**2**).

**Fig.14b** zeigt ein erfindungsgemäßes Verbundbauteil in der Ausgestaltung eines Instrumententafelträgers auf Basis eines Hohlprofils (**1**) gemäß **Fig.14a** mit vier Biegungen und sechs angespritzten Funktionselementen (**3**), wovon (**3i**) für ein Befestigungselement zu den A-Säulen (links und rechts), (**3ii**) für eine Abstützung zur Spritzwand, (**3iii**) für ein Befestigungselement für die Lenksäule, (**3iiii**) für eine Abstützung zur Mittelkonsole mit integrierten Aufnahmen für Infotainment und Klimaanlage und (**3iiiii**) für eine Befestigung und Aufnahme für Handschuhkasten und Airbag stehen.

**Beispiele**

Folgende Parameter wurden an einem Rohr-Versuchswerkzeug als Hohlprofil mit Durethan® BKV30 (30 Gew.-% glasfaserverstärktes Polyamid 6 der Lanxess Deutschland GmbH, Köln) als in Verfahrensschritt e) einzusetzendem Kunststoff für ein GIT-Verfahren in Verfahrensschritt f) im Versuch V1 angewandt: Spritzdruck um die 700bar spez., Massetemperatur 280°C, Werkzeugtemperatur 80°C, Einspritzgeschwindigkeit bis zu 150mm/s, Zykluszeit 94 sek..
Parameter Gasinjektion: Verzögerung der Gaseinleitung 3,5 Sek., Formteil ausblasen mit 80bar für 3 Sek, Gasdruckhaltezeit 175bar für 45sek, Gasdruckabbau 20 sek.

**GIT Verfahrensablaufschritte:**

1. Gaseinleitungsverzögerung

2. Formteil ausblasen mit eingestelltem Druck

3. Ab/Aufbau des Gashaltedrucks

4. Gasdruck halten

5. Gasdruck abbauen

6. Formteil entlasten

Versuche V2, V3, V4 und V5 wurden an einem Rohr-Versuchswerkzeug aus derselben Fertigung wie es in V1 als Hohlprofil verwendet wurde mit Durethan® BKV30 (30 Gew.-% glasfaserverstärktes Polyamid 6 der Lanxess Deutschland GmbH, Köln) als in Verfahrensschritt e) einzusetzendem Kunststoff nach dem WIT-Verfahren durchgeführt mit den WIT **Verfahrensablaufschritten**:

1. Wasserdruckaufbau bis zum Einleitventil.

2. Wasserdruck mit eingestelltem Druck ins Formteil einleiten

3. Ab/Aufbau des Wasserhaltedruck

4. Wasserdruck halten

5. Wasserdruck Abbau

6. Formteil entwässern

**Tab. 1**

**Tab. 1** zeigt die Versuchseinstellungen Druck und Druckprofil der Druckerzeugungseinheit (der Firma Maximator) für die Wasserinjektion und für die Gasinjektion

| **Maximator WIT-Anlage Einstellung:** | | | | | | | | | | |
|---|---|---|---|---|---|---|---|---|---|---|
| | GIT Versuch 1 | | WIT Versuch 2 | | WIT Versuch 3 | | WIT Versuch 4 | | Versuch 5 | |
| | 2.0 Schuß | | Schuß 1-10 | | Schuß 11-25 | | Schuß 26-45 | | Schuß 46-82 | |
| | | | Massetemperatur 285°C | | Massetemperatur 290°C | | Massetemperatur 290°C | | Massetemperatur 290°C | |
| | Druck in bar | Zeit in sek. | Druck in bar | Zeit in sek. | Druck in bar. | Zeit in sek.. | Druck in bar | Zeit in sek. | Druck in bar. | Zeit in sek |
| 1 | 0 | 2,5 | 50 | 4 | 50 | 4 | 50 | 4 | 50 | 4 |
| 2 | 250 | 0,5 | 50 | 2 | 50 | 2 | 50 | 2,5 | 50 | 2,5 |
| 3 | 250 | 2,5 | 200 | 1 | 200 | 1 | 200 | 1,5 | 200 | 1,5 |
| 4 | 150 | 0,5 | 200 | 10 | 200 | 10 | 200 | 10 | 200 | 10 |
| 5 | 150 | 30 | 0 | 1 | 0 | 1 | 0 | 1 | 0 | 1 |
| 6 | 0 | 0,5 | 0 | 25 | 0 | 25 | 0 | 25 | 0 | 25 |
| 7 | 0 | 15 | | | | | | | | |
| Abwasser-Start ab Schritt: 6 | | | | | | | | | | |

EP 4 025 403 B1

**Tab. 2**

**Tab. 2** zeigt die Versuchsparameter Hydraulikdruck (<Druck>) und Zeit (<Verzögerungszeit>) für die Ansteuerung der Kernzugsysteme, die die 2 Ausblaskavitäten und den Angußverschlußschieber steuern

| Kernzug | Funktion | Verzögerungszeit in Sek. | | | | | Druck |
|---|---|---|---|---|---|---|---|
| | | V1 | V2 | V3 | V4 | V5 | |
| 1 | Große Ausblaskavität | 0,5 | 1 | 1 | 1,5 | 1 | 40% (56bar) |
| 2 | Kleine Ausblaskavität | 1 | 1,5 | 1,5 | 2 | 1,5 | 40% (56bar) |
| 3 | Angußverschlußschieber | 35 | 25 | 25 | 25 | 25 | 100% (140bar) |

**Eingesetzte Materialien:**

Material 1: Durethan® KU2-2224/30 H2.0, Pt.30CD4C0560;Fb.900116

Material 2: Durethan® KU2-2224/30 H2.0, Pt.30CD2N0630;Fb.901510

Material 3: Durethan® KU2-2224/30 H2.0, JADE 3576 B

Material 1 wurde in den Verfahren GIT und WIT verglichen. Material 2 und 3 wurden untereinander im WIT-Verfahren verglichen. In Tabelle 1 ist unter Bemerkungen die Zuordnung der Materialien zu den jeweiligen Versuchen beschrieben.

**Bemerkungen GIT-Einstellungen:**

Eine Variation der Einstellparameter für die GIT-Anlage brachte keine Verbesserung der Innenoberfläche des GIT-Rohres. Es konnte ein vollautomatisierter Zyklus mit gleichbleibender Qualität gefahren werden.

**Bemerkungen WIT-Einstellungen:**

Mit der WIT Einstellung für V5 des Versuchsprotokolls konnte der kürzeste Zyklus erreicht werden. Mit den Materialien aus V3 und V4 kam es wesentlich seltener zur Torbildung am Verteiler. Ausschuss durch große separate Gasblasen war hier nicht zu beobachten. Es konnte ein vollautomatisierter Zyklus gefahren werden.

**Patentansprüche**

**1.** Verfahren zur Herstellung eines Verbundbauteils durch

a) Bereitstellen eines Spritzgießwerkzeugs mit wenigstens einer zu öffnenden Kavität und einem Werkzeugmaß (A) in Schließrichtung und einem Werkzeugmaß (B) rechtwinklig zur Schließrichtung des Werkzeugs und einem Kavitätsumfang (UW) das dem Umfang der Kavität im Bereich der Werkzeugmaße (A) und (B) entspricht, und wenigstens einer Nebenkavität,
b) Bereitstellen wenigstens eines Hohlprofils in Form eines Hohlzylinders mit

i) dem Hohlprofilumfangsmaß (UH), der Wanddicke (S), dem Außendurchmesser (C) und der Längsachse (L),
ii) wenigstens einer Biegung mit dem Winkel (W) und
iii) wenigstens einer Perforation 2 entlang seiner Längsachse (L),

und in Bereichen des Hohlprofils ohne Biegung

iv) mit einem Verhältnis von Außendurchmesser (C) zur Wanddicke (S) im Bereich von 5:1 bis 300:1, wobei der Außendurchmesser (C) im Bereich der Werkzeugkontaktflächen (K) um einen Bereich von 0,1 bis 5% größer ist als das Werkzeugmaß (A) und um einen Bereich von 0,1 bis 5% kleiner ist als das Werkzeugmaß (B), und

v) die Angaben zum Außendurchmesser (C) sich auf 90° in Richtung zur Längsachse (L) des Hohlprofils gesehen beziehen, und

vi) das Hohlprofilumfangsmaß UH = C • $\pi$ dem Kavitätsumfangsmaß (UW) der wenigstens einen Spritzgießwerkzeugkavität in geschlossenem Zustand entspricht, und

vii) als Werkzeugkontaktflächen die Dichtflächen des Werkzeugs in geschlossenem Zustand mit dem Hohlprofil bezeichnet werden,

c) Einlegen des wenigstens einen Hohlprofils in die wenigstens eine Kavität des Spritzgießwerkzeugs,

d) Schließen der wenigstens einen Kavität des Spritzgießwerkzeugs und Verpressen des Hohlprofils an seinen Werkzeugkontaktflächen in Schließrichtung der wenigstens einen Kavität,

e) Einspritzen von Kunststoff in das Innere des Hohlprofils und gleichzeitiges Befüllen der wenigstens einen Nebenkavität über die wenigstens eine Perforation 2 im Hohlprofil,

f) Herausdrücken von überschüssigem Kunststoff durch wenigstens eine der beiden seitlichen Öffnungen des Hohlprofils durch Injektion von Gas oder Fluid oder einer Kombination von beidem,

g) Abkühlen der in das Hohlprofil und in die Nebenkavität in e) eingebrachten Kunststoffschmelze, und

h) Entnehmen des fertigen Verbundbauteils aus dem Spritzgießwerkzeug und gegebenenfalls Entfernen von Angüssen,

mit der Maßgabe, dass sich die Angaben zu Werkzeugmaß (A), zu Werkzeugmaß (B) und zum Kavitätsumfangsmaß (UW) in Verfahrensschritt a) sich auf Bereiche des Spritzgießwerkzeugs beziehen, in denen Bereiche des Hohlprofils ohne Biegung liegen und das Hohlprofil auf Metall oder auf einem Composite basiert.

2. Verfahren gemäß Anspruch 1, **dadurch gekennzeichnet, dass** die wenigstens eine Perforation (2) vor, während oder nach Verfahrensschritt b) in Form wenigstens eines Loches oder einer Bohrung, bevorzugt mehrerer Löcher bzw. Bohrungen, von außen in die Wandung des Hohlprofils an Positionen, an denen wenigstens ein Funktionselement vorgesehen ist, eingebracht wird.

3. Verfahren gemäß Anspruch 1 oder 2, **dadurch gekennzeichnet, dass** der Verbund eines mittels Kunststoffeinspritzung ins Hohlprofil gleichzeitig ausgestalteten Funktionselements mit dem Hohlprofil durch zusätzliche Maßnahmen unterstützt wird.

4. Verfahren gemäß Anspruch 3, **dadurch gekennzeichnet, dass** die Maßnahmen das Einbringen von Sicken, Löcher, Bohrungen in die Hohlprofilwandung oder das Auftragen zusätzlicher Verankerungselemente umfassen.

5. Verfahren gemäß einem oder mehreren der Ansprüche 1 bis 4, **dadurch gekennzeichnet, dass** als Metall Stahl, Aluminium oder Legierungen des Aluminiums eingesetzt werden.

6. Verfahren gemäß einem oder mehreren der Ansprüche 1 bis 5, **dadurch gekennzeichnet, dass** das Hohlprofil einen kreisrunden oder elliptischen Querschnitt aufweist, wobei ein elliptischer Querschnitt maximal 10% von einem kreisrunden Querschnitt abweicht.

7. Verfahren gemäß einem oder mehreren der Ansprüche 1 bis 6, **dadurch gekennzeichnet, dass** das Hohlprofil eine Wanddicke (S) im Bereich von 0,1 bis 10,0mm aufweist.

8. Verfahren gemäß einem oder mehreren der Ansprüche 1 bis 7, **dadurch gekennzeichnet, dass** das Hohlprofil eine Längsachse (L) im Bereich von 60 bis 2000mm aufweist.

9. Verfahren gemäß einem oder mehreren der Ansprüche 1 bis 8, **dadurch gekennzeichnet, dass** wenigstens ein Material aus der Gruppe Metalle, Legierungen, thermoplastische Kunststoffe und duroplastische Kunststoffe zur Herstellung des Hohlprofils eingesetzt wird.

10. Verfahren gemäß Anspruch 9, **dadurch gekennzeichnet, dass** als Metalle Stahl, Aluminium, Magnesium, Titan, Zinn, Zink, Blei, Silber, Gold, Messing oder Legierungen und als thermoplastische Kunststoffe Polyamide, Polyalkylenterephthalate, Polyethylen, Polypropylen und Polyvinylchlorid und als duroplastische Kunststoffe Epoxidharze, vernetzbare Polyurethane oder ungesättigte Polyesterharze eingesetzt werden.

11. Verfahren gemäß Anspruch 10, **dadurch gekennzeichnet, dass** als Polyamid Polyamid 6 und als Polyalkylenterephthalat Polybutylenterephthalat oder Polyethylenterephthalat, insbesondere Polybutylenterephthalat, eingesetzt wird.

12. Verfahren gemäß Anspruch 10 oder 11, **dadurch gekennzeichnet, dass** ein thermoplastischer Kunststoff mit wenigstens einem Verstärkungsstoff eingesetzt wird, vorzugsweise auf 100 Massenanteile des thermoplastischen Kunststoffs Verstärkungsstoffe in Mengen im Bereich von 10 bis 400 Massenanteilen.

13. Verfahren gemäß Anspruch 12, **dadurch gekennzeichnet, dass** als Hohlprofil ein Thermoplast basiertes Composite eingesetzt wird, worin der Verstärkungsstoff im Wesentlichen auf Geweben oder Gelegen von Fasermatten, insbesondere Glasfasermatten auf Basis von Langglasfasern oder Endlosglasfasern basiert.

**Claims**

1. Method of manufacturing a composite component by

   a) providing an injection mold having at least one cavity to be opened and a tool dimension (A) in the closing direction and a mold dimension (B) at a right angle to the closing direction of the mold, and a cavity circumference (UW) which corresponds to the circumference of the cavity in the region of the mold dimensions (A) and (B), and at least one secondary cavity,
   b) providing at least one hollow profile in the form of a hollow cylinder having

      i) the hollow profile circumferential dimension (UH), the wall thickness (S), the outer diameter (C) and the longitudinal axis (L),
      ii) at least one bend with angle (W), and
      iii) at least one perforation 2 along its longitudinal axis (L),
      and in areas of the hollow profile without bending
      iv) with a ratio of outer diameter (C) to wall thickness (5) in the range from 5:1 to 300:1, the outer diameter (C) in the region of the contact surfaces (K) is larger than the tool dimension (A) by a range of 0.1 to 5% and is smaller by a range of from 0.1 to 5% than the tool dimension (B), and
      v) the data on the outer diameter (C) refer to 90° in the direction to the longitudinal axis (L) of the hollow profile, and
      vi) the hollow profile circumferential dimension UH = C * $\pi$ corresponds to the cavity circumference (UW) of the at least one injection mold cavity in the closed state, and
      vii) the sealing surfaces of the mold in closed state with the hollow profile are named contact surfaces,

   c) inserting the at least one hollow profile into the at least one cavity of the injection mold,
   d) closing the at least one cavity of the injection mold, and pressing the hollow profile at its mold contact surfaces in the closing direction of the at least one cavity,
   e) injection of plastic into the interior of the hollow profile and simultaneous filling of the at least one secondary cavity via the at least one perforation 2 in the hollow profile,
   f) pressing out excess plastic material through at least one of the two lateral openings of the hollow profile by injection of gas or fluid or a combination of both,
   g) cooling the plastic melt introduced into the hollow profile and into the secondary cavity in e), and
   h) removing of the finished composite component from the injection mold and optionally removing of sprues,

   with the proviso that the data on mold dimension (A), on mold dimension (B) and the cavity circumference (UW) in process step a) refer to regions of the of the injection mold in which areas of the hollow profile without bending are lying and the hollow profile is based on metal or on a composite.

2. Method according to claim 1, **characterized in that** the at least one perforation (2) is formed before, during or after process step b) in the form of at least one hole or bore, preferably of several holes or bores, from the outside into the wall of the hollow profile at positions at which at least one functional element is provided.

3. Method according to claim 1 or 2, **characterized in that** the arrangement of a functional element with the hollow profile simultaneously formed by means of plastic injection into the hollow profile is supported by additional measures.

4. Method according to claim 3, **characterized in that** the measures comprise the introduction of beads, holes, bores into the wall of the hollow profile or the application of additional anchoring elements.

5. Method according to one or more of claims 1 to 4, **characterized in that** the metal used is steel, aluminum or alloys of the aluminum.

6. Method according to one or more of claims 1 to 5, **characterized in that** the hollow profile has a circular or elliptical cross-section, wherein an elliptical cross-section deviates at most 10% from a circular cross-section.

7. Method according to one or more of claims 1 to 6, **characterized in that** the hollow profile has a wall thickness (5) in the range of 0.1 to 10.0mm.

8. Method according to one or more of claims 1 to 7, **characterized in that** the hollow profile has a longitudinal axis (L) in the range of 60 to 2000mm.

9. Method according to one or more of claims 1 to 8, **characterized in that** at least one material selected from the group consisting of metals, alloys, thermoplastics and thermosetting plastics is used for the production of the hollow profile.

10. Method according to claim 9, **characterized in that** steel, aluminum, magnesium, titanium, tin, zinc, lead, silver, gold, brass or alloys are used as metals and that polyamides, polyalkylene terephthalate, polyethylene, polypropylene and polyvinyl chloride are used as thermoplastics and epoxy resins, crosslinkable polyurethanes or unsaturated polyester resins are used as thermosetting plastics.

11. Method according to claim 10, **characterized in that** polyamide 6 is used as polyamide and polybutylene terephthalate or polyethylene terephthalate, in particular polybutylene terephthalate, is used as polyalkylene terephthalate.

12. Method according to claim 10 or 11, **characterized in that** a thermoplastic with at least one reinforcing material is used, wherein preferably an amount ranging from 10 to 400 parts by mass of the reinforcing material is used in relation to 100 parts by mass of the thermoplastic.

13. Method according to claim 12, **characterized in that** a thermoplastic-based composite is used as hollow profile, in which the reinforcing material is essentially based on woven fabrics or layers of fiber mats, in particular glass fiber mats based on long glass fibers or continuous glass fibers.

**Revendications**

1. Procédé de fabrication d'une pièce composite par

    a) la mise en place d'un outil de moulage par injection pourvu d'au moins une cavité ouverte et d'une dimension d'outil (A) dans la direction de fermeture et d'une dimension d'outil (B) perpendiculaire à la direction de fermeture de l'outil et d'un périmètre de la cavité (UW) qui correspond au périmètre de la cavité dans la zone des dimensions d'outil (A) et (B), et d'au moins une cavité secondaire,
    b) la mise en place d'un profilé creux sous la forme d'un cylindre creux avec

        i) la dimension du périmètre du profilé creux (UH), l'épaisseur de paroi (S), le diamètre extérieur (C) et l'axe longitudinal (L),
        ii) au moins un coude avec un angle (W) et
        iii) au moins une perforation 2 le long de son axe longitudinal (L),
        et, dans des zones du profilé creux sans coude,
        iv) avec un rapport du diamètre extérieur (C) sur l'épaisseur de paroi (S) dans la plage de 5 : 1 à 300 : 1, où le diamètre extérieur (C) dans la zone des surfaces de contact d'outil (K) est supérieur d'une plage de 0,1 à 5 % à la dimension d'outil (A) et d'une plage de 0,1 à 5 % à la dimension d'outil (B), et
        v) les indications concernant le diamètre extérieur (C) visent 90 °, vu en direction de l'axe longitudinal (L) du profilé creux, et

vi) la mesure du périmètre du profilé creux UH = C * π correspond à la dimension du périmètre de la cavité (UW) de l'au moins une cavité d'outil de moulage par injection à l'état fermé, et

vii) les surfaces de jointure de l'outil dans l'état fermé avec le profilé creux sont désignées comme étant des surfaces de contact d'outil,

c) de dépôt de l'au moins un profilé creux dans l'au moins une cavité de l'outil de moulage par injection,

d) de fermeture de l'au moins une cavité de l'outil de moulage par injection et de compression du profilé creux au niveau de ses surfaces de contact d'outil dans la direction de fermeture de l'au moins une cavité,

e) d'injection de matière plastique à l'intérieur du profilé creux et de remplissage simultané de l'au moins une cavité secondaire par le biais de l'au moins une perforation 2 dans le profilé creux,

f) d'extrusion de la matière plastique en excès par au moins un des deux orifices latéraux du profilé creux par injection d'un gaz ou d'un fluide ou d'une combinaison des deux,

g) de refroidissement de la matière plastique en fusion introduite en e) dans le profilé creux et dans la cavité secondaire, et

h) de prélèvement de la pièce composite terminée à partir de l'outil de moulage par injection et éventuellement de retrait de coulées de raccord,

à condition que les indications concernant la dimension d'outil (A), la dimension d'outil (B) et la dimension du périmètre de la cavité (UW) dans l'étape de procédé a) désignent des zones de l'outil de moulage par injection dans lesquelles se situent des zones du profilé creux sans coude et que le profilé creux est à base de métal ou d'un composite.

2. Procédé selon la revendication 1, **caractérisé en ce que** l'au moins une perforation (2) est rapportée avant, pendant ou après l'étape de procédé b) sous la forme d'au moins un trou ou d'un alésage, de préférence de plusieurs trous, respectivement alésages, à partir de extérieur dans la paroi du profilé creux à des positions où au moins un élément fonctionnel est prévu.

3. Procédé selon la revendication 1 ou la revendication 2, **caractérisé en ce que** le composite d'un élément fonctionnel exécuté simultanément au moyen d'une injection de matière plastique avec le profilé creux est renforcé par des mesures complémentaires.

4. Procédé selon la revendication 3, **caractérisé en ce que** les mesures comprennent la mise en place de bourrelets, de trous, d'alésages dans la paroi de profilé creux ou l'apport d'éléments d'ancrage complémentaires.

5. Procédé selon une ou plusieurs des revendications 1 à 4, **caractérisé en ce que** de l'acier, de l'aluminium ou des alliages de l'aluminium sont employés en tant que métal.

6. Procédé selon une ou plusieurs des revendications 1 à 5, **caractérisé en ce que** le profilé creux présente une section transversale arrondie en cercle ou elliptique, où une section transversale elliptique dévie au maximum de 10 % par rapport à une section transversale circulaire.

7. Procédé selon une ou plusieurs des revendications 1 à 6, **caractérisé en ce que** le profilé creux présente une épaisseur de paroi (S) dans la plage de 0,1 à 10,0 mm.

8. Procédé selon une ou plusieurs des revendications 1 à 7, **caractérisé en ce que** le profilé creux présente un axe longitudinal (L) dans la plage de 60 à 2000 mm.

9. Procédé selon une ou plusieurs des revendications 1 à 8, **caractérisé en ce qu'**au moins un matériau du groupe des métaux, des alliages, des matières plastiques thermoplastiques et des matières plastiques duroplastiques est employé pour la fabrication du profilé creux.

10. Procédé selon la revendication 9, **caractérisé en ce que** de l'acier, de l'aluminium, du magnésium, du titane, de l'étain, du zinc, du plomb, de l'argent, de l'or, du laiton ou des alliages sont employés en tant que métaux, et des polyamides, des polyalcylène téréphtalates, du polyéthylène, du polypropylène et du polychlorure de vinyle sont employés en tant que matières plastiques thermoplastiques et des résines époxydes, des polyuréthanes réticulables ou des résines de polyester insaturées sont employés en tant que matières plastiques duroplastiques.

**11.** Procédé selon la revendication 10, **caractérisé en ce que** du polyamide 6 est employé en tant que polyamide et du polybutylène téréphtalate ou du polyéthylène téréphtalate, notamment du poly butylène téréphtalate, est employé en tant que polyalcylène téréphtalate.

**12.** Procédé selon la revendication 10 ou la revendication 11, **caractérisé en ce qu'**une matière plastique thermoplastique avec au moins une substance de renforcement est employée, de préférence, pour 100 parties en masse de matière plastique thermoplastique, des substances de renforcement dans des quantités dans la plage de 10 à 400 parties en masse.

**13.** Procédé selon la revendication 12, **caractérisé en ce qu'**un composite basé sur un thermoplastique est employé en tant que profilé creux, dans lequel la substance de renforcement se base essentiellement sur des tissus ou des treillis de nappes de fibres, en particulier des nappes de fibres de verre à base de fibres de verre longues ou de fibres de verre sans fin.

**Fig. 1**

**Fig.2**

**Fig.3**

**Fig.4**

**Fig. 5**

**Fig.6**

**Fig.7**

**Fig.8**

EP 4 025 403 B1

Fig.9

32

**Fig.10**

**Fig.11**

**Fig.12**

**Fig.13**

**Fig. 14a**

**Fig.14b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0187568 A1
- EP 3369544 A1
- WO 2009077026 A1
- DE 202018001599 U1
- DE 102011084519 A1
- DE 19946011 A1
- DE 102013212758 A1
- DE 3638958 A1
- DE 10024224 B4
- DE 102011112913 A1
- DE 102014226500 A1
- US 5934744 A
- US 8534739 B

**In der Beschreibung aufgeführte Nicht-Patentliteratur**

- **W. MICHAELI ; G. MENGES ; P. MOHREN.** Anleitung zum Bau von Spritzgießwerkzeugen. Carl Hanser Verlag, 1999
- *CHEMICAL ABSTRACTS,* 25038-54-4
- *CHEMICAL ABSTRACTS,* 32131-17-2
- *CHEMICAL ABSTRACTS,* 9002-88-4
- *CHEMICAL ABSTRACTS,* 9003-07-0
- *CHEMICAL ABSTRACTS,* 24968-12-5
- *CHEMICAL ABSTRACTS,* 25038-59-9
- *CHEMICAL ABSTRACTS,* 9002-86-2
- Projektil-Injektionstechnik geht in Serie. *Kunststoffe,* November 2006